# EUROPEAN PATENT SPECIFICATION

(11) **EP 4 098 691 B1**
(45) Date of publication and mention of the grant of the patent: **21.08.2024**
(21) Application number: 21748121.7
(22) Date of filing: 21.01.2021
(51) Int. Cl.: C08K 5/16, C08K 5/5313, C08K 5/5393, C08K 5/5399, C08K 7/02, C08L 23/00, C08L 23/26, C08L 67/00, C08L 67/02, C08L 63/00, C08L 63/04

(54) **THERMOPLASTIC POLYESTER RESIN COMPOSITION AND MOLDED ARTICLE**
THERMOPLASTISCHE POLYESTERHARZZUSAMMENSETZUNG UND FORMARTIKEL
COMPOSITION DE RÉSINE DE POLYESTER THERMOPLASTIQUE ET ARTICLE MOULÉ

(30) Priority: 31.01.2020 JP 2020014607; 27.08.2020 JP 2020143570
(43) Date of publication of application: 07.12.2022
(73) Proprietor: Toray Industries, Inc., Tokyo 103-8666 (JP)
(72) Inventor: MIYAMOTO, Kohei, Nagoya-shi, Aichi 455-8502 (JP); TANABE, Junki, Nagoya-shi, Aichi 455-8502 (JP); TOJO, Yusuke, Nagoya-shi, Aichi 455-8502 (JP); YOKOE, Makito, Nagoya-shi, Aichi 455-8502 (JP); UMETSU, Hideyuki, Nagoya-shi, Aichi 455-8502 (JP)
(74) Representative: Mewburn Ellis LLP
(86) International application number: PCT/JP2021/002047
(87) International publication number: WO 2021/153414

(56) References cited:
- WO-A1-2006/090751
- WO-A1-2007/007663
- WO-A1-2011/007687
- WO-A1-2014/021101
- WO-A1-2014/084157
- JP-A- 2003 342 482
- JP-A- 2009 292 897
- JP-A- 2013 544 921
- JP-A- 2019 044 037
- No further relevant documents disclosed

## Description

### TECHNICAL FIELD

The present invention relates to a thermoplastic polyester resin composition and a molded article obtained by molding the thermoplastic polyester resin composition.

### BACKGROUND ART

With various properties such as excellent injection moldability and mechanical properties, thermoplastic polyester resins are utilized in a wide range of fields such as mechanical machine parts, electric and electronic components, and automotive parts. Since the polyester resins are crystalline plastics with high melting points, the polyester resins require melt-kneading type extruders and injection molding machines with a high operating temperature. However, since the thermoplastic polyester resins are essentially combustible, in order to use the thermoplastic polyester resin as an industrial material for mechanical machine parts, electric and electronic components, automotive parts, and the like, in addition to a balance of general chemical and physical properties, safety against flame, that is, flame retardancy is required, and a high degree of flame retardancy to meet the V-0 requirements specified in UL-94. Since the thermoplastic polyester resins are easily deteriorated by hydrolysis, in order to use the thermoplastic polyester resin as an industrial material for mechanical machine parts, electric and electronic components, automotive parts, and the like, in addition to a balance of general chemical and physical properties, it has been required to have long-term hydrolysis resistance. With the downsizing of molded articles in recent years, there is an increasing demand for thinner and lighter molded articles, and in particular, in thin-walled molded article applications such as connectors, a material having excellent retention stability in which changes in the viscosity during melt retention is small is required, because a high rate of change in the viscosity during melt retention leads to the occurrence of molding defects such burrs and short shots during the molding.

As a method of imparting flame retardancy to a polyester resin, a method of compounding a halogen-based organic compound as a flame retardant and an antimony compound as a flame retardant aid in a resin is generally used, but increasing numbers of environment-conscious people are worrying about the influence of the halogen-based organic compound on environment. In the case of using the polyester resin in an energized environment, safety against tracking breakdown ignited by decomposition or carbonization of the resin by discharge, that is, tracking resistance is required, and a high degree of tracking resistance indicating CTI rank 0 of IEC60112 standards is often required.

In particular, in recent years, electric vehicles have attracted attention due to the increase in environmental awareness, and a higher degree of tracking resistance is required, but when the halogen-based organic compound and the antimony compound are compounded with the polyester resin, a problem arises in that tracking resistance significantly deteriorates. Therefore, in recent years, there has been stronger call for the use of non-halogen type flame retardants completely free from halogens, and it has been proposed to blend a phosphorus-based flame retardant such as a phosphinate and a phosphazene compound, and a nitrogen-based flame retardant such as melamine cyanurate as a flame retardant.

As a flame-retardant resin composition using a non-halogen type flame retardant, for example, there are disclosed a resin composition obtained by blending a thermoplastic polyester resin, a heat-moisture resistant phosphorus-based flame retardant such as diamine phosphate, a phosphorus-based flame retardant, a nitrogen-containing flame retardant, and a dripping inhibitor (Patent Document 1), a resin composition obtained by blending a thermoplastic resin, a phosphinate, and a metal corrosion-resistant agent having a specific structure (Patent Document 2), a resin composition obtained by blending a thermoplastic polyester resin, a methacrylic resin, two or more phosphorus-based flame retardants selected from a condensed phosphoric acid ester, a phosphazene compound, and an organic phosphinic acid metal salt, and a nitrogen-based flame retardant (Patent Document 3), a resin composition obtained by blending a thermoplastic polyester resin, a phosphinate, a nitrogen compound, and one or more phosphorus compounds selected from a phosphoric acid ester compound, a phosphazene compound, and a phosphaphenanthrene compound (Patent Document 4), a resin composition obtained by blending a thermoplastic polyester resin, a phosphinate, a phosphazene compound, a nitrogen-containing flame retardant, an enhancer, and other additives (Patent Document 5), a flame retardant preparation for a thermoplastic polymer containing a phosphinate, a phosphazene compound, an inorganic zinc compound, and a nitrogen-containing flame retardant (Patent Document 6), a resin composition obtained by blending a polybutylene terephthalate-based resin, a thermoplastic polyester elastomer, a phosphazene compound, an epoxy compound, and polyorganosiloxane (Patent Document 7), a resin composition obtained by blending a polybutylene terephthalate resin, a phosphinate, a phosphazene compound, and a nitrogen-containing cyclic compound (Patent Document 8), and a resin composition obtained by blending a polyalkylene terephthalate resin, a polystyrene-based resin, a compatibilizer, a phosphorus-based flame retardant selected from phosphazene and a phosphinate, and nitrogen-based flame retardant (Patent Document 9).

As a technique for improving hydrolysis resistance of a thermoplastic polyester resin, for example, Patent Document 10 discloses a resin composition obtained by blending a biphenyl aralkyl epoxy resin or a dicyclopentadiene epoxy resin with a thermoplastic polyester resin.

### PRIOR ART DOCUMENTS

### PATENT DOCUMENTS

Patent Document 1: Japanese Patent Laid-open Publication No. 2019-44037
Patent Document 2: International Publication No. 2011/007687
Patent Document 3: International Publication No. 2014/021101
Patent Document 4: Japanese Patent Laid-open Publication No. 2010-202748
Patent Document 5: Japanese Patent Laid-open Publication No. 2013-544921
Patent Document 6: Japanese Patent Laid-open Publication No. 2018-525449
Patent Document 7: Japanese Patent Laid-open Publication No. 2006-152122
Patent Document 8: International Publication No. 2014/084157
Patent Document 9: Japanese Patent Laid-open Publication No. 2009-292897
Patent Document 10: International Publication No. 2015/072216

### SUMMARY OF THE INVENTION

### PROBLEMS TO BE SOLVED BY THE INVENTION

However, since the phosphorus-based flame retardant such as phosphinates and condensed phosphoric acid esters disclosed in Patent Documents 1 to 9 is an acidic compound, when the phosphorus-based flame retardant is blended in a thermoplastic polyester resin, the acid acts as a catalyst for cleaving the ester group of the thermoplastic polyester resin, so that there is a problem in that mechanical properties easily deteriorate and hydrolysis resistance significantly deteriorates.

On the other hand, Patent Document 10 discloses a technique for improving the hydrolysis resistance of the thermoplastic polyester resin by blending a biphenyl aralkyl type epoxy resin or a dicyclopentadiene type epoxy resin with respect to the thermoplastic polyester resin, but since the epoxy group of the epoxy resin is also ring-opened by an acid of the phosphorus-based flame retardant, there is a problem in that mechanical properties and hydrolysis resistance are insufficient and retention stability deteriorates only by simply using the epoxy resin disclosed in Patent Document 10 and the phosphorus-based flame retardant disclosed in Patent Documents 1 to 9 in combination.

In addition, there is a problem in that the screw of the kneading apparatus corrodes or the mold of the injection molding machine corrodes due to the corrosive gas generated from the phosphorus-based flame retardant such as phosphinates and condensed phosphoric acid esters disclosed in Patent Documents 1 to 9. It is considered that metal of a terminal or the like in contact with the obtained thermoplastic resin molded article corrodes, and the contact may be contaminated. Patent Documents 2 and 7 disclose a technique for suppressing metal corrosion, but it has been difficult to achieve both metal corrosion resistance and hydrolysis resistance at a high level.

Since the phosphazene compound mentioned in Patent Documents 1 to 9 has a problem of low flame retardancy, it is necessary to use the phosphazene compound in combination with the phosphorus-based flame retardant having high flame retardancy such as phosphinates and condensed phosphoric acid esters, and there is a problem in that mechanical properties and hydrolysis resistance deteriorate.

From the above, in the techniques disclosed in Patent Documents 1 to 10, it is difficult to obtain a material that satisfies all of flame retardancy and tracking resistance, mechanical properties and hydrolysis resistance, which deteriorate by blending of the phosphorus-based flame retardant, and metal corrosion resistance and retention stability.

An object of the present invention is to provide a thermoplastic polyester resin composition with which a molded article excellent in flame retardancy, tracking resistance, mechanical properties, hydrolysis resistance, and metal corrosion resistance can be obtained despite the thermoplastic polyester resin composition containing a phosphorus-based flame retardant, and a molded article thereof.

### SOLUTIONS TO THE PROBLEMS

The present inventors have conducted intensive studies in order to solve the above-described problems, and as a result, have found that the above-described problems can be solved by blending, with respect to 100 parts by weight of (A) a thermoplastic polyester resin, 0.1 to 50 parts by weight of (B) at least one phosphinate selected from a phosphinate and a diphosphinate, 0.1 to 10 parts by weight of (C) a phosphazene compound, 0.1 to 50 parts by weight of (D) a nitrogen-based flame retardant, 0.1 to 10 parts by weight of (E) a polyfunctional epoxy compound, and 0.1 to 20 parts by weight of (F) an olefin resin, and setting a ratio of the parts by weight of the component (B) and the parts by weight of the component (C) to a specific value, thereby attaining the present invention. That is, the present invention has the following constitutions.
[1] A thermoplastic polyester resin composition being obtained by blending, with respect to 100 parts by weight of (A) a thermoplastic polyester resin, 0.1 to 50 parts by weight of (B) at least one phosphinate selected from a phosphinate and a diphosphinate, 0.1 to 10 parts by weight of (C) a phosphazene compound, 0.1 to 50 parts by weight of (D) a nitrogen-based flame retardant, 0.1 to 10 parts by weight of (E) a polyfunctional epoxy compound, and 0.1 to 20 parts by weight of (F) an olefin resin, the thermoplastic polyester resin composition satisfying the following Requirement (i):
   (i) a ratio of the parts by weight of the (B) at least one phosphinate selected from a phosphinate and a diphosphinate to the parts by weight of the (C) phosphazene compound (the parts by weight of the component (B) with respect to 100 parts by weight of the component (A)/the parts by weight of the component (C) with respect to 100 parts by weight of the component (A)) is 2.0 to 8.0.
[2] The thermoplastic polyester resin composition described in [1], in which a content rate of the (C) phosphazene compound in 100 mass% of the thermoplastic polyester resin composition is 1 mass% or more and less than 5 mass%.
[3] The thermoplastic polyester resin composition described in [1] or [2], in which, when a total amount of the (B) at least one phosphinate selected from a phosphinate and a diphosphinate, the (C) phosphazene compound, and the (D) nitrogen-based flame retardant is regarded as 100 mass%, the (B) at least one phosphinate selected from a phosphinate and a diphosphinate is 30 to 65 mass%, the (C) phosphazene compound is 5 to 40 mass%, and the (D) nitrogen-based flame retardant is 30 to 65 mass%.
[4] The thermoplastic polyester resin composition described in any one of [1] to [3], in which the (E) polyfunctional epoxy compound includes at least novolac-type epoxy.
[5] The thermoplastic polyester resin composition described in any one of [1] to [4], in which the (F) olefin resin includes at least an olefin resin modified with an acid.
[6] The thermoplastic polyester resin composition described in any one of [1] to [5], in which 0.001 to 0.5 parts by weight of (G) a metal corrosion-resistant agent is further blended with respect to 100 parts by weight of the (A) thermoplastic polyester resin.
[7] The thermoplastic polyester resin composition described in any one of [1] to [6], in which 0.001 to 0.5 parts by weight of (H) a retention stability improver is further blended with respect to 100 parts by weight of the (A) thermoplastic polyester resin.
[8] The thermoplastic polyester resin composition described in any one of [1] to [7], in which 1 to 100 parts by weight of (I) a fibrous reinforcing material is further blended with respect to 100 parts by weight of the (A) thermoplastic polyester resin.
[9] The thermoplastic polyester resin composition described in any one of [1] to [8], in which 0.01 to 1 part by weight of (J) a dripping inhibitor is further blended with respect to 100 parts by weight of the (A) thermoplastic polyester resin.
[10] The thermoplastic polyester resin composition described in any one of [1] to [9], in which the (A) thermoplastic polyester resin is a polybutylene terephthalate resin.
[11] The thermoplastic polyester resin composition described in any one of [1] to [10], in which ratios of tensile strengths after exposure of an ASTM No. 1 dumbbell-shaped (thickness: 1/8 inches) test piece for tensile property evaluation molded according to ASTM D638 (2005) for 50 hours and 100 hours in an atmosphere of a relative humidity of 100% and a temperature of 121°C to a tensile strength before exposure (Tensile strength retention rate (%) = ((Tensile strength after exposure/Tensile strength before exposure) × 100)) are 60% or more and 40% or more, respectively.
[12] A molded article being obtained by melt molding the thermoplastic polyester resin composition described in any one of [1] to [11].
[13] The molded article described in [12], in which a comparative tracking index according to IEC60112 is 400 V or more.

### EFFECTS OF THE INVENTION

The thermoplastic polyester resin composition of the present invention does not contain a halogen-based flame retardant such as a bromine-containing flame retardant and enables a molded article, which is excellent in flame retardancy, tracking resistance, and metal corrosion resistance, has excellent mechanical properties and hydrolysis resistance, and is less likely to bleed out even in a high-temperature and high-humidity environment, to be obtained.

### EMBODIMENTS OF THE INVENTION

Next, a thermoplastic polyester resin composition of the present invention will be described in detail.

A thermoplastic polyester resin composition of the present invention is a thermoplastic polyester resin composition being obtained by blending, with respect to 100 parts by weight of (A) a thermoplastic polyester resin, 0.1 to 50 parts by weight of (B) at least one phosphinate selected from a phosphinate and a diphosphinate, 0.1 to 10 parts by weight of (C) a phosphazene compound, 0.1 to 50 parts by weight of (D) a nitrogen-based flame retardant, 0.1 to 10 parts by weight of (E) a polyfunctional epoxy compound, and 0.1 to 20 parts by weight of (F) an olefin resin, the thermoplastic polyester resin composition satisfying the following Requirement (i):
(i) a ratio of the parts by weight of the (B) at least one phosphinate selected from a phosphinate and a diphosphinate to the parts by weight of the (C) phosphazene compound (the parts by weight of the component (B) with respect to 100 parts by weight of the component (A)/the parts by weight of the component (C) with respect to 100 parts by weight of the component (A)) is 2.0 to 8.0.

The (A) thermoplastic polyester resin is generally excellent in injection moldability and mechanical properties, but has a low limiting oxygen index, and thus burns when it comes close to a fire source such as open flame. In the present invention, as a method of enhancing the flame retardancy of the (A) thermoplastic polyester resin, with respect to 100 parts by weight of the (A) thermoplastic polyester resin, 0.1 to 50 parts by weight of the (B) at least one phosphinate selected from a phosphinate and a diphosphinate (hereinafter, referred to as "(B) phosphinate" in some cases), 0.1 to 10 parts by weight of the (C) phosphazene compound, 0.1 to 50 parts by weight of the (D) nitrogen-based flame retardant, 0.1 to 10 parts by weight of the (E) polyfunctional epoxy compound, and 0.1 to 20 parts by weight of the (F) olefin resin are blended. It has been found that the (B) phosphinate generally used as a phosphorus-based flame retardant improves flame retardancy by promoting the formation of a carbonized layer during burning the (A) thermoplastic polyester resin, but at the same time, an acidic component is generated by decomposition of the phosphorus-based flame retardant in a high-temperature and high-humidity environment, so that the mechanical strength and hydrolysis resistance of the (A) thermoplastic polyester resin are significantly impaired. Therefore, by using the (C) phosphazene compound and the (E) polyfunctional epoxy compound in combination with the phosphorus-based flame retardant, while suppressing generation of an acidic component caused by the decomposition of the phosphorus-based flame retardant, the terminal of the carboxyl group derived from the (A) thermoplastic polyester resin generated by hydrolysis is reaction-blocked and repaired, so that a mechanical strength, hydrolysis resistance, flame retardancy, and tracking resistance all can be achieved at a high level.

Here, the thermoplastic polyester resin composition of the present invention contains a reactant obtained by reacting each of the component (A), the component (B), the component (C), the component (D), the component (E), and the component (F) with another component, but the reactant is generated by a complicated reaction, and there is a circumstance in which specifying the structure thereof is not practical. Thus, in the present invention, the invention is sometimes specified by the blended components.

The (A) thermoplastic polyester resin used in the present invention is a polymer or copolymer having, as a main structural unit, at least one residue selected from the group consisting of (1) a dicarboxylic acid or an ester-forming derivative thereof and a diol or an ester-forming derivative thereof, (2) a hydroxycarboxylic acid or an ester-forming derivative thereof, and (3) a lactone. Here, the expression "as a main structural unit" refers to having 50 mol% or more of at least one residue selected from the group consisting of (1) to (3) in all the structural units, and it is a preferred aspect that these residues are present in an amount of 80 mol% or more. Among these, a polymer or copolymer having a residue of (1) a dicarboxylic acid or an ester-forming derivative thereof and a diol or an ester-forming derivative thereof as a main structural unit is preferred from the viewpoint of more excellent mechanical properties and heat resistance.

Examples of the dicarboxylic acid or the ester-forming derivative thereof include aromatic dicarboxylic acids such as terephthalic acid, isophthalic acid, phthalic acid, 2,6-naphthalenedicarboxylic acid, 1,5-naphthalenedicarboxylic acid, bis(p-carboxyphenyl)methane, anthracene dicarboxylic acid, 4,4'-diphenyl ether dicarboxylic acid, 5-tetrabutylphosphonium isophthalic acid, and 5-sodium sulfoisophthalic acid, aliphatic dicarboxylic acids such as oxalic acid, succinic acid, adipic acid, sebacic acid, azelaic acid, dodecanedionic acid, malonic acid, glutaric acid, and dimer acid, alicyclic dicarboxylic acids such as 1,3-cyclohexanedicarboxylic acid and 1,4-cyclohexanedicarboxylic acid, and ester-forming derivatives thereof. Two or more kinds of these may be used.

Examples of the diol or the ester-forming derivative thereof include aliphatic or alicyclic glycols having 2 to 20 carbon atoms such as ethylene glycol, propylene glycol, 1,4-butanediol, neopentyl glycol, 1,5-pentanediol, 1,6-hexanediol, decamethylene glycol, cyclohexanedimethanol, cyclohexanediol, and dimer diol, long-chain glycols having a molecular weight of 200 to 100,000 such as polyethylene glycol, poly-1,3-propylene glycol, and polytetramethylene glycol, and aromatic dioxy compounds such as 4,4'-dihydroxybiphenyl, hydroquinone, t-butylhydroquinone, bisphenol A, bisphenol S, and bisphenol F, and ester-forming derivatives thereof. Two or more kinds of these may be used.

Examples of the polymer or copolymer having a dicarboxylic acid or an ester-forming derivative thereof and a diol or an ester-forming derivative thereof as a structural unit include aromatic polyester resins such as polyethylene terephthalate, polypropylene terephthalate, polybutylene terephthalate, polypropylene isophthalate, polybutylene isophthalate, polybutylene naphthalate, polypropylene isophthalate/terephthalate, polybutylene isophthalate/terephthalate, polypropylene terephthalate/naphthalate, polybutylene terephthalate/naphthalate, polybutylene terephthalate/decane dicarboxylate, polypropylene terephthalate/sodium 5-sulfoisophthalate, polybutylene terephthalate/sodium 5-sulfoisophthalate, polypropylene terephthalate/polyethylene glycol, polybutylene terephthalate/polyethylene glycol, polypropylene terephthalate/polytetramethylene glycol, polybutylene terephthalate/polytetramethylene glycol, polypropylene terephthalate/isophthalate/polytetramethylene glycol, polybutylene terephthalate/isophthalate/polytetramethylene glycol, polybutylene terephthalate/succinate, polypropylene terephthalate/adipate, polybutylene terephthalate/adipate, polypropylene terephthalate/sebacate, polybutylene terephthalate/sebacate, polypropylene terephthalate/isophthalate/adipate, polybutylene terephthalate/isophthalate/succinate, polybutylene terephthalate/isophthalate/adipate, and polybutylene terephthalate/isophthalate/sebacate. Here, "/" represents a copolymer.

Among these, from the viewpoint of further improving mechanical properties and heat resistance, a polymer or copolymer having a residue of aromatic dicarboxylic acid or an ester-forming derivative thereof and a residue of an aliphatic diol or an ester-forming derivative thereof as main structural units is more preferred, and a polymer or copolymer having a residue of terephthalic acid, naphthalenedicarboxylic acid, or an ester-forming derivative thereof and a residue of an aliphatic diol selected from propylene glycol and 1,4-butanediol, or an ester-forming derivative thereof as main structural units is further preferred.

Among them, aromatic polyester resins such as polyethylene terephthalate, polypropylene terephthalate, polybutylene terephthalate, polypropylene naphthalate, polybutylene naphthalate, polypropylene isophthalate/terephthalate, polybutylene isophthalate/terephthalate, polypropylene terephthalate/naphthalate, and polybutylene terephthalate/naphthalate are particularly preferred, polyethylene terephthalate, polypropylene terephthalate and polybutylene naphthalate are more preferred, and from the viewpoint of excellent moldability and crystallinity, a polybutylene terephthalate resin is further preferred. Two or more kinds of these can also be used in an arbitrary content.

In the present invention, the ratio of terephthalic acid or an ester-forming derivative thereof to all dicarboxylic acids constituting the polymer or copolymer having a residue of a dicarboxylic acid or an ester-forming derivative thereof and a residue of a diol or an ester-forming derivative thereof as main structural units is preferably 30 mol% or more and more preferably 40 mol% or more.

In the present invention, as the (A) thermoplastic polyester resin, a liquid crystalline polyester resin capable of forming anisotropy during melting can be used. Examples of the structural unit of the liquid crystalline polyester resin include an aromatic oxycarbonyl unit, an aromatic dioxy unit, an aromatic and/or aliphatic dicarbonyl unit, an alkylenedioxy unit, and an aromatic iminooxy unit.

The carboxyl group amount in the (A) thermoplastic polyester resin used in the present invention is preferably 50 eq/t or less from the viewpoint of fluidity, hydrolysis resistance, and heat resistance. When the carboxyl group amount exceeds 50 eq/t, the carboxyl group acts as an acid catalyst, so that hydrolysis resistance may significantly deteriorate. The carboxyl group amount is more preferably 40 eq/t or less and further preferably 30 eq/t or less. The lower limit value of the carboxyl group amount is about 0 eq/t. Here, the carboxyl group amount in the (A) thermoplastic polyester resin is a value measured by dissolving the (A) thermoplastic polyester resin in an o-cresol/chloroform solvent, and then titrating the resulting solution with ethanolic potassium hydroxide.

The (A) thermoplastic polyester resin used in the present invention preferably has a weight average molecular weight (Mw) of 8,000 or more, from the viewpoint of further improving mechanical properties. When the upper limit value of the weight average molecular weight (Mw) is 500,000 or less, fluidity can be improved, which is preferable. The weight average molecular weight is more preferably 300,000 or less and further preferably 250,000 or less. In the present invention, Mw of the (A) thermoplastic polyester resin is a value in terms of polymethyl methacrylate (PMMA) measured by gel permeation chromatography (GPC) using hexafluoroisopropanol as a solvent.

The (A) thermoplastic polyester resin used in the present invention can be produced by a polycondensation method, a ring-opening polymerization method, or the like, which is well known. The production method may be either batch polymerization or continuous polymerization, and can be applied to either transesterification or direct polymerization; however, from the viewpoint of productivity, continuous polymerization is preferred, and direct polymerization is more preferred.

When the (A) thermoplastic polyester resin used in the present invention is a polymer or copolymer obtained by a condensation reaction and having a dicarboxylic acid or an ester-forming derivative thereof and a diol or an ester-forming derivative thereof as main components, the dicarboxylic acid or an ester-forming derivative thereof and the diol or an ester-forming derivative thereof can be produced by performing an esterification reaction or transesterification reaction and then performing a polycondensation reaction.

In order to effectively advance the esterification reaction or transesterification reaction and the polycondensation reaction, it is preferable to add a polymerization reaction catalyst during these reactions. Specific examples of the polymerization reaction catalyst include organic titanium compounds such as a methyl ester, tetra-n-propyl ester, tetra-n-butyl ester, tetraisopropyl ester, tetraisobutyl ester, tetra-tert-butyl ester, cyclohexyl ester, phenyl ester, benzyl ester, and tolyl ester of titanic acid or mixed esters thereof, tin compounds such as dibutyltin oxide, methyl phenyltin oxide, tetraethyltin, hexaethyl ditin oxide, cyclohexahexyl ditin oxide, didodecyltin oxide, triethyltin hydroxide, triphenyltin hydroxide, triisobutyltin acetate, dibutyltin diacetate, diphenyltin dilaurate, monobutyltin trichloride, dibutyltin dichloride, tributyltin chloride, dibutyltin sulfide, and butylhydroxytin oxide, as well as alkyl stannonic acids including methyl stannonic acid, ethyl stannonic acid, and butyl stannonic acid, zirconia compounds such as zirconium tetra-n-butoxide, and antimony compounds such as antimony trioxide and antimony acetate. Two or more kinds of these may be used.

Among these polymerization reaction catalysts, an organic titanium compound and a tin compound are preferred, and a tetra-n-butyl ester of titanic acid is further preferably used. The addition amount of the polymerization reaction catalyst is preferably in a range of 0.01 to 0.2 parts by weight with respect to 100 parts by weight of the thermoplastic polyester resin.

In the thermoplastic polyester resin composition of the present invention, the (B) at least one phosphinate selected from a phosphinate and a diphosphinate is blended in order to improve flame retardancy. The (B) phosphinate promotes the formation of the carbonized layer of the (A) thermoplastic polyester resin and can further improve flame retardancy.

The phosphinate in the present invention is a compound having a structure represented by Formula (1) below.

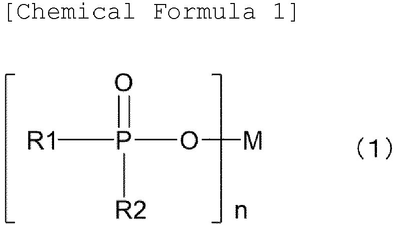

(In the formula, R1 and R2 may be the same as or different from each other, are a hydrogen atom, an alkyl group having 1 to 16 carbon atoms, or an aryl group, and may be linear or branched. M is sodium, magnesium, nickel, manganese, calcium, aluminum, or zinc. n is an integer of 1 to 4.)

The diphosphinate in the present invention is a compound having a structure represented by Formula (2) below.

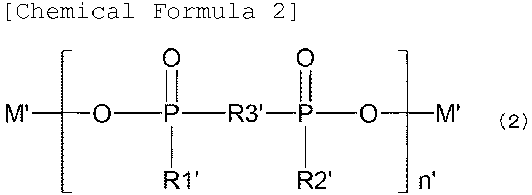

(In the formula, R1' and R2' may be the same as or different from each other, are a hydrogen atom, an alkyl group having 1 to 16 carbon atoms, or an aryl group, and may be linear or branched. R3' is a linear or branched alkylene group having 1 to 10 carbon atoms or arylene group having 6 to 10, an alkylarylene group, or an arylalkylene group. M' is sodium, magnesium, nickel, manganese, calcium, aluminum, or zinc. n' is an integer of 1 to 4.)

In the present invention, as the (B) phosphinate, a polymer of a phosphinate or a polymer of a diphosphinate can also be used. Examples of the compound include structures described in Japanese Patent Laid-open Publication No. 2002-540224.

From the viewpoint of excellent mechanical properties, corrosiveness to metals, melt retention stability, fluidity, flame retardancy, and the like, the metal component is preferably aluminum, and the (B) phosphinate is specifically preferably aluminum hypophosphite, aluminum ethylmethylphosphinate, or aluminum diethylphosphinate and more preferably aluminum diethylphosphinate. Examples of commercially available products of the (B) phosphinate include aluminum hypophosphite "Phoslite" (registered trademark) IP-A manufactured by Italmatch Chemicals S.p.A and "Exolit" (registered trademark) OP1230 and OP1240 manufactured by Clariant Japan K.K.

The blending amount of the (B) phosphinate in the present invention is 0.1 to 50 parts by weight with respect to 100 parts by weight of the (A) thermoplastic polyester resin, from the viewpoint of flame retardancy and hydrolysis resistance. When the blending amount of the component (B) is less than 0.1 parts by weight, flame retardancy deteriorates. The blending amount thereof is more preferably 1 part by weight or more, further preferably 10 parts by weight or more, and most preferably 18 parts by weight or more. On the other hand, when the blending amount of the component (B) exceeds 50 parts by weight, a mechanical strength and hydrolysis resistance deteriorate. The blending amount thereof is more preferably 30 parts by weight or less and further preferably 25 parts by weight or less.

In the thermoplastic polyester resin composition of the present invention, the (C) phosphazene compound is blended in order to improve flame retardancy, tracking resistance, mechanical properties, and hydrolysis resistance.

The (C) phosphazene compound in the present invention may be a compound having a -P=N- bond in the molecule, and examples thereof include a chain or cyclic phosphazene compound having a structure represented by General Formula (3) below.

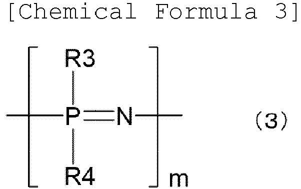

(In General Formula (3) above, m represents an integer of 1 to 1000. R3 and R4 each independently represent a hydrogen atom, a linear, branched or cyclic alkyl group having 1 or more and 18 or less carbon atoms, a linear, branched or cyclic alkoxyl group having 1 or more and 30 or less carbon atoms, an aryl group having 6 or more and 30 or less carbon atoms, or am aryloxy group having 6 or more and 30 or less carbon atoms.)

In General Formula (3) above, examples of the alkyl group includes a methyl group and an ethyl group. Examples of the alkoxyl group include a methoxy group and an ethoxy group. Examples of the aryl group include a phenyl group. Examples of the aryloxy group include a phenyloxy group. m is preferably 3 to 30, and it is preferable to include at least a cyclic phosphazene compound in which the structure represented by General Formula (3) above is cyclically bonded.

The (C) phosphazene compound may be a crosslinked phosphazene compound. Such a crosslinked phosphazene compound can be obtained, for example, by crosslinking a chain or cyclic phosphazene compound represented by General Formula (3) above via a divalent crosslinking group, and examples thereof include a phosphazene compound having a structure represented by General Formula (4) below.

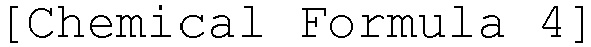

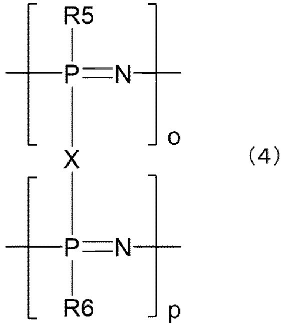

(In General Formula (4) above, o and p represent an integer of 1 to 1000. R5 and R6 each independently represent a hydrogen atom, a linear, branched or cyclic alkyl group having 1 or more and 18 or less carbon atoms, a linear, branched or cyclic alkoxyl group having 1 or more and 30 or less carbon atoms, an aryl group having 6 or more and 30 or less carbon atoms, or am aryloxy group having 6 or more and 30 or less carbon atoms. X represents a divalent crosslinking group.)

In General Formula (4) above, examples of the alkyl group includes a methyl group and an ethyl group. Examples of the alkoxyl group include a methoxy group and an ethoxy group. Examples of the aryl group include a phenyl group. Examples of the aryloxy group include a phenyloxy group.

In General Formula (4) above, X represents a divalent crosslinking group, and examples of the crosslinking group include a dialkoxybenzene group represented by the structure of -O-C₆H₄-O- (o-dialkoxybenzene group, m-dialkoxybenzene group, or p-dialkoxybenzene group), and a bisphenylene group represented by the following General Formula (5). The divalent crosslinking group can be used singly or in combination of two or more kinds thereof. The crosslinked phosphazene compound can be obtained by the method described in Japanese Patent Laid-open Publication No. 2003-192792 or other known methods.

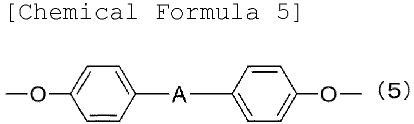

(In General Formula (5), A represents a direct bond, -C(CH₃)₂-, -SO₂-, -S-, or -O-.)

As the (C) phosphazene compound, a synthesized product may be used, and a commercially available product can also be used. The phosphazene compound can be synthesized by known methods as described in "Hosufazen Kagobutsu No Gosei To Oyo (Synthesis and Application of Phosphazene Compounds)" (written by Meisetsu Kajiwara, published by CMC Publishing CO., LTD., 1986), and for example, the phosphazene compound can be synthesized by reacting phosphorus pentachloride or phosphorus trichloride as a phosphorus source with ammonium chloride or ammonia gas as a nitrogen source by a known method (or by purifying a cyclic product), and subjecting the resulting substance to reaction for substitution with alcohol, phenol, or amine. As a commercially available product, "Rabitle" (registered trademark) FP-110 manufactured by FUSHIMI Pharmaceutical Co., Ltd. and the like are preferably used.

The blending amount of the (C) phosphazene compound in the present invention is 0.1 to 10 parts by weight with respect to 100 parts by weight of the (A) thermoplastic polyester resin, from the viewpoint of a balance among flame retardancy, hydrolysis resistance, and tracking resistance. When the blending amount of the component (C) is less than 0.1 parts by weight, flame retardancy, hydrolysis resistance, and tracking resistance deteriorate. The blending amount thereof is more preferably 1 part by weight or more, further preferably 2 parts by weight or more, and most preferably 4 parts by weight or more. On the other hand, when the blending amount of the component (C) exceeds 10 parts by weight, bleeding out easily occurs. The blending amount thereof is more preferably 9 parts by weight or less and further preferably 8 parts by weight or less.

The content rate of the (C) phosphazene compound in 100 mass% of the thermoplastic polyester resin composition is preferably 1 mass% or more and less than 5 mass%. When the content rate is less than 5 mass%, a material excellent in a balance among flame retardancy, hydrolysis resistance, tracking resistance, and bleeding out can be obtained. The content rate is further preferably 1 mass% or more and 4.0 mass% or less, and more preferably 1.5 mass% or more and 3.6 mass% or less.

In the thermoplastic polyester resin composition of the present invention, the (D) nitrogen-based flame retardant is further blended in order to improve flame retardancy and tracking resistance. Examples of the (D) nitrogen-based flame retardant in the present invention include an aliphatic amine compound, an aromatic amine compound, a nitrogen-containing heterocyclic compound, a cyan compound, an aliphatic amide compound, an aromatic amide compound, urea, and thiourea. Two or more of these may be blended. Among these, a nitrogen-containing heterocyclic compound is preferably used. At this time, in the case of a flame retardant containing both a nitrogen atom and a phosphorus atom, when the flame retardant has a -P=N- bond in the molecule, the flame retardant is regarded as the (C) phosphazene compound, and when the flame retardant does not have such a bond, the flame retardant is regarded as a nitrogen-based flame retardant.

Examples of the aliphatic amine compound include ethylamine, butylamine, diethylamine, ethylenediamine, butylenediamine, triethylenetetramine, 1,2-diaminocyclohexane, and 1,2-diaminocyclooctane.

Examples of the aromatic amine compound include aniline and phenylenediamine.

Examples of the nitrogen-containing heterocyclic compound include uric acid, adenine, guanine, 2,6-diaminopurine, 2,4,6-triaminopyridine, and a triazine compound.

Examples of the cyan compound include dicyandiamide.

Examples of the aliphatic amide compound and the aromatic amide compound include N,N-dimethylacetamide and N,N-diphenylacetamide.

The triazine compound exemplified in the nitrogen-containing heterocyclic compound is a compound having a triazine skeleton. Examples thereof include triazine, melamine, benzoguanamine, methylguanamine, cyanuric acid, melamine cyanurate, melamine isocyanurate, trimethyltriazine, triphenyltriazine, amelin, amelide, thiocyanurate, diaminomercaptotriazine, diaminomethyltriazine, diaminophenyltriazine, diaminoisopropoxytriazine and melamine polyphosphate, and melamine cyanurate, melamine isocyanurate, and melamine polyphosphate are preferably used.

As the melamine cyanurate or melamine isocyanurate, an adduct of cyanuric acid or isocyanuric acid with a triazine compound is preferred, and an adduct having a composition of usually 1 : 1 (molar ratio) and optionally 1 : 2 (molar ratio) can be exemplified. These are produced by a known method, and for example, a mixture of melamine and cyanuric acid or isocyanuric acid is formed into a water slurry, the water slurry is thoroughly mixed to form their salt in the form of fine particles, and this slurry was filtered and dried to provide the final product normally in the form of powder. The salt may not be entirely pure, but may contain a small amount of unreacted melamine and residual cyanuric acid or isocyanuric acid. If a sufficiently high dispersibility is not achieved, a dispersing agent such as tris-(β-hydroxyethyl)isocyanurate or a known surface treatment agent such as polyvinyl alcohol and a metal oxide such as silica may be used in combination. The average particle diameters before and after being blended with the resin of melamine cyanurate or melamine isocyanurate are preferably 0.1 to 100 um from the viewpoint of flame retardancy, a mechanical strength, and surface smoothness of the molded article. Here, the average particle diameter is an average particle diameter with 50% cumulative distribution measured by a laser micron sizer method. As a commercially available product of melamine cyanurate or melamine isocyanurate, MC-4000, MC-4500, MC-6000, and the like manufactured by Nissan Chemical Corporation are preferably used.

The blending amount of the (D) nitrogen-based flame retardant is 0.1 to 50 parts by weight with respect to 100 parts by weight of the (A) thermoplastic polyester resin, from the viewpoint of a balance between flame retardancy and toughness. When the blending amount of the component (D) is less than 0.1 parts by weight, flame retardancy is insufficient. The blending amount thereof is more preferably 1 part by weight or more, further preferably 10 parts by weight or more, and most preferably 15 parts by weight or more. On the other hand, when the blending amount of the component (D) exceeds 50 parts by weight, mechanical properties deteriorate. The blending amount thereof is more preferably 40 parts by weight or less and further preferably 30 parts by weight or less.

In the thermoplastic polyester resin composition of the present invention, the (E) polyfunctional epoxy compound is further blended in order to improve hydrolysis resistance. By blending the (E) polyfunctional epoxy compound, the carboxyl group of the (A) thermoplastic polyester resin is reaction-blocked, and the hydrolysis reaction in a high-temperature and high-humidity environment can be suppressed.

The (E) polyfunctional epoxy compound used in the present invention is a compound having two or more epoxy groups in one molecule, and is a compound containing no bromine atom. Examples thereof include, but are not particularly limited to, a glycidyl ester compound, a glycidyl ether compound, an epoxidized fatty acid ester compound, a glycidyl imide compound, and an alicyclic epoxy compound. These may be used in combination of two or more kinds thereof.

The glycidyl ether compound is a compound having a glycidyl ether structure, and examples thereof include a condensate of a phenol compound and epichlorohydrin, novolac-type epoxy, and a glycidyl ether of a polyvalent hydroxyl group compound.

Specific examples of the condensate of a phenol compound and epichlorohydrin include condensates obtained by condensation of epichlorohydrin with phenol compounds such as bisphenol A, resorcinol, hydroquinone, pyrocatechol, bisphenol F, saligenin, bisphenol S, 4,4'-dihydroxybiphenyl, 1,5-dihydroxynaphthalene, 1,4-dihydroanthracene-9,10-diol, 6-hydrotoxy-2-naphthoic acid, 1,1-methylenebis-2,7-dihydroxynaphthalene, 1,1,2,2-tetrakis-4-hydroxyphenylethane, and cashew phenol.

Specific examples of the novolac-type epoxy include phenol novolac-type epoxy, cresol novolac-type epoxy, naphthol novolac-type epoxy, bisphenol A novolac-type epoxy, dicyclopentadiene-phenol-added novolac-type epoxy, dimethylenephenylene-phenol-added novolac-type epoxy, and dimethylenebiphenylene-phenol-added novolac-type epoxy.

In the present invention, the polyvalent hydroxyl group compound is an aliphatic compound having two or more hydroxyl groups, and specific examples thereof include glycol having 2 to 20 carbon atoms, glycerin, polyglycerin, dipentaerythritol, tripentaerythritol, xylitol, mannitol, sorbitol, galactose, maltitol, lactitol, isomalt, inositol, glucose, and fructose.

In the present invention, the epoxidized fatty acid ester compound is a compound obtained by epoxidizing an unsaturated bond of an unsaturated fatty acid ester such as soybean oil or linseed oil, and specific examples thereof include epoxidized fatty acid octyl ester, epoxidized soybean oil, and epoxidized linseed oil.

Specific examples of the glycidyl imide compound include N-glycidyl phthalimide, N-glycidyl-4-methylphthalimide, N-glycidyl-4,5-dimethylphthalimide, N-glycidyl-3-methylphthalimide, N-glycidyl-3,6-dimethylphthalimide, N-glycidyl-4-ethoxyphthalimide, N-glycidyl-4-chlorophthalimide, N-glycidyl-4,5-dichlorophthalimide, N-glycidyl-3,4,5,6-tetrabromophthalimide, N-glycidyl-4-n-butyl-5-bromophthalimide, N-glycidyl succinimide, N-glycidyl hexahydrophthalimide, N-glycidyl-1,2,3,6-tetrahydrophthalimide, N-glycidyl maleinimide, N-glycidyl-α,β-dimethylsuccinimide, N-glycidyl-α-ethylsuccinimide, N-glycidyl-α-propylsuccinimide, triglycidyl isocyanurate, N-glycidylbenzamide, N-glycidyl-p-methylbenzamide, N-glycidylnaphthamide, and N-glycidylsteramide.

Specific examples of the alicyclic epoxy compound include 3,4-epoxycyclohexylmethyl-3,4-epoxycyclohexylcarboxylate, bis(3,4-epoxycyclohexylmethyl)adipate, vinylcyclohexene diepoxide, N-methyl-4,5-epoxycyclohexane-1,2-dicarboxylic acid imide, N-ethyl-4,5-epoxycyclohexane-1,2-dicarboxylic acid imide, N-phenyl-4,5-epoxycyclohexane-1,2-dicarboxylic acid imide, N-naphthyl-4,5-epoxycyclohexane-1,2-dicarboxylic acid imide, and N-tolyl-3-methyl-4,5-epoxycyclohexane-1,2-dicarboxylic acid imide.

The (E) polyfunctional epoxy compound is preferably at least one selected from a glycidyl ether compound, an epoxidized fatty acid ester compound, and an alicyclic epoxy compound, from the viewpoint that the reaction between epoxy groups can be suppressed and deterioration of retention stability can be suppressed, and among these, a glycidyl ether compound and an epoxidized fatty acid ester compound are more preferred. Among these, from the viewpoint that hydrolysis resistance can be further improved, a glycidyl ether compound is further preferred. Among the glycidyl ether compounds, from the viewpoint that heat resistance can be improved, novolac-type epoxy is preferred, and dicyclopentadiene-phenol-added novolac-type epoxy is particularly preferred.

The (E) polyfunctional epoxy compound is preferably an epoxy compound having an epoxy equivalent of 100 to 3000 g/eq. When the epoxy equivalent of the (E) polyfunctional epoxy compound is 100 g/eq or more, the amount of gas during melt processing can be suppressed. The epoxy equivalent is further preferably 150 g/eq or more. When the epoxy equivalent of the (E) polyfunctional epoxy compound is 3000 g/eq or less, both of long-term hydrolysis resistance and melt retention stability at a high temperature can be achieved at a higher level. The epoxy equivalent is further preferably 2000 g/eq or less.

In the present invention, the blending amount of the (E) polyfunctional epoxy compound is 0.1 to 10 parts by weight with respect to 100 parts by weight of the (A) thermoplastic polyester resin. When the blending amount of the component (E) is less than 0.1 parts by weight, an effect of improving long-term hydrolysis resistance cannot be obtained. The blending amount thereof is more preferably 0.3 parts by weight or more and further preferably 0.5 parts by weight or more. On the other hand, when the blending amount of the component (E) exceeds 10 parts by weight, heat resistance and retention stability tend to deteriorate. The blending amount thereof is more preferably 7.5 parts by weight or less and further preferably 5 parts by weight or less.

In the present invention, the preferable range of the blending amount of the (E) polyfunctional epoxy compound can be set according to the epoxy equivalent of the (E) polyfunctional epoxy compound. For example, the ratio of the amount of the epoxy group derived from the (E) polyfunctional epoxy compound blended in the thermoplastic polyester resin composition to the amount of the carboxyl group derived from the (A) thermoplastic polyester resin blended in the thermoplastic polyester resin composition (the epoxy group blending amount (eq/g)/the carboxyl group blending amount (eq/g)) is preferably 0.5 to 8. When (the epoxy group blending amount (eq/g)/the carboxyl group blending amount (eq/g)) is 0.5 or more, long-term hydrolysis resistance can be further improved. (The epoxy group blending amount (eq/g)/the carboxyl group blending amount (eq/g)) is preferably 1 or more and more preferably 2 or more. When (the epoxy group blending amount (eq/g)/the carboxyl group blending amount (eq/g)) is 8 or less, retention stability, heat resistance, and mechanical properties all can be achieved at a higher level. (The epoxy group blending amount (eq/g)/the carboxyl group blending amount (eq/g)) is preferably 7 or less and more preferably 6 or less.

In the present invention, the amount of the carboxyl group derived from the (A) thermoplastic polyester resin blended in the thermoplastic polyester resin composition can be determined from the carboxyl group concentration of the component (A) and the blending ratio of the component (A) in the entire thermoplastic polyester resin composition. The carboxyl group concentration of the (A) thermoplastic polyester resin can be calculated by titrating a solution obtained by dissolving the (A) thermoplastic polyester resin in an o-cresol/chloroform (2/1, vol/vol) mixed solution with 0.05 mol/L ethanolic potassium hydroxide using 1% bromophenol blue as an indicator.

In the thermoplastic polyester resin composition of the present invention, the (F) olefin resin is further blended. By blending the (F) olefin resin, mechanical properties and tracking resistance can be further enhanced.

The (F) olefin resin is a thermoplastic resin obtained by polymerizing or copolymerizing olefins such as ethylene, propylene, butene, isoprene, and pentene, and specific examples thereof include homopolymers such as polyethylene, polypropylene, polystyrene, poly 1-butene, poly 1-pentene, and polymethylpentene, ethylene/propylene copolymers, ethylene/propylene/non-conjugated diene copolymers, ethylene-butene-1 copolymers, ethylene/glycidyl methacrylate copolymers, ethylene/butene-1/glycidyl methacrylate copolymers, ethylene/propylene/glycidyl methacrylate copolymers, ethylene/octene-1/glycidyl methacrylate copolymers, ethylene/acrylic acid ester/glycidyl methacrylate copolymers, ethylene/maleic anhydride copolymers, ethylene/butene-1/maleic anhydride copolymers, ethylene/propylene/maleic anhydride copolymers, and ethylene/acrylic acid ester/maleic anhydride copolymers. These (F) olefin resins may be used singly or in combination of two or more kinds thereof.

From the viewpoint of excellent dispersibility in the (A) thermoplastic polyester resin and excellent hydrolysis resistance and toughness, the (F) olefin resin preferably includes at least an olefin resin modified with an acid. The olefin resin modified with an acid is a modified olefin resin in which an acidic substrate is introduced into the main chain or the side chain, and examples thereof include ethylene/maleic anhydride copolymers, ethylene/butene-1/maleic anhydride copolymers, ethylene/propylene/maleic anhydride copolymers, and ethylene/acrylic acid ester/maleic anhydride copolymers. Among these, from the viewpoint of excellent dispersibility in the (A) thermoplastic polyester resin, flame retardancy, and hydrolysis resistance, it is preferable to contain at least ethylene/butene-1/maleic anhydride copolymers.

The blending amount of the (F) olefin resin is 0.1 to 20 parts by weight with respect to 100 parts by weight of the (A) thermoplastic polyester resin. In this range, it is possible to improve hydrolysis resistance and tracking resistance while securing flame retardancy. When the blending amount is less than 0.1 parts by weight, an effect of improving tracking resistance cannot be obtained. The blending amount thereof is more preferably 2 parts by weight or more, further preferably 3 parts by weight or more, and particularly preferably 4 parts by weight or more. On the other hand, when the blending amount exceeds 20 parts by weight, flame retardancy and mechanical properties tend to deteriorate, which is not preferable. The blending amount thereof is more preferably 15 parts by weight or less and further preferably 10 parts by weight or less.

In the present invention, a ratio the parts by weight of the (B) phosphinate and the parts by weight of the (C) phosphazene compound (the parts by weight of the component (B) with respect to 100 parts by weight of the component (A)/the parts by weight of the component (C) with respect to 100 parts by weight of the component (A)) is 2.0 to 8.0. Since the component produced by the decomposition of the component (B) and the component (B) are acidic, when the component (B) is blended with the (A) thermoplastic polyester resin and the (E) polyfunctional epoxy compound, not only the hydrolysis of the ester bond of the component (A) is promoted by the component (B) and a mechanical strength and hydrolysis resistance are reduced, but also the component (B) opens the epoxy group of the component (E), so that the reaction blocking effect of the carboxyl group of the component (A) which the component (E) has is significantly reduced, and as a result, the hydrolysis resistance is not improved even when the component (E) is blended. However, by blending the (B) phosphinate and the (C) phosphazene compound at a ratio of parts by weight of the component (B) and the parts by weight of the component (C) of 2.0 to 8.0, the influence of an acid derived from the component (B) can be suppressed. This is because the component (C) is a component in which an acidic component is hardly generated, and the basicity of the -P=N- bond of the component (C) can efficiently capture the acid component derived from the component (B) when the blending ratio is as described above.

The component (C) is a component that hardly generates an acidic component, but has low flame retardancy. When the component (C) is used in combination with the component (B) having high flame retardancy, flame retardancy can be enhanced, but at this time, only when the ratio of the parts by weight of the component (B) and the parts by weight of the component (C) is set to 2.0 to 8.0 and the component (E) and the component (F) are additionally blended, a resin composition having an excellent balance among mechanical properties, hydrolysis resistance, tracking resistance, and metal corrosion resistance at a high level while maintaining flame retardancy can be obtained. When the ratio exceeds 8.0, hydrolysis resistance, metal corrosion resistance, and tracking resistance deteriorate. The ratio is more preferably 2.2 to 7.7, further preferably 2.5 to 7.5, particularly preferably 3.0 to 7.0, and most preferably 3.2 to 5.2.

In the thermoplastic polyester resin composition of the present invention, it is preferable that, when a total amount of the (B) at least one phosphinate selected from a phosphinate and a diphosphinate, the (C) phosphazene compound, and the (D) nitrogen-based flame retardant is regarded as 100 mass%, the (B) at least one phosphinate selected from a phosphinate and a diphosphinate is 30 to 65 mass%, the (C) phosphazene compound is 5 to 40 mass%, and the (D) nitrogen-based flame retardant is 30 to 65 mass%. The component (B), the component (C), and the component (D) used in the present invention contribute to improvement of the flame retardancy of the thermoplastic polyester resin composition, and also cause deterioration of mechanical properties and hydrolysis resistance. When the component (B), the component (C), and the component (D) are blended at a ratio in the above ranges, a thermoplastic polyester resin composition to be obtained is excellent in mechanical properties and hydrolysis resistance while maintaining high flame retardancy, which is preferable.

When the total amount of the (B) at least one phosphinate selected from a phosphinate and a diphosphinate, the (C) phosphazene compound, and the (D) nitrogen-based flame retardant is regarded as 100 mass%, the (B) phosphinate is more preferably 34 mass% or more and further preferably 36 mass% or more, from the viewpoint of flame retardancy. On the other hand, from the viewpoint of mechanical properties and hydrolysis resistance, the (B) phosphinate is more preferably 62 mass% or less and further preferably 58 mass% or less. From the viewpoint of hydrolysis resistance, the (C) phosphazene compound is more preferably 6 mass% or more and further preferably 8 mass% or more. On the other hand, from the viewpoint of suppressing bleeding out and generated gas, the (C) phosphazene compound is more preferably 34 mass% or less and further preferably 30 mass% or less. From the viewpoint of flame retardancy, the (D) nitrogen-based flame retardant is more preferably 32 mass% or more and further preferably 34 parts by mass or more. On the other hand, from the viewpoint of mechanical properties, the (D) nitrogen-based flame retardant is more preferably 60 mass% or less and further preferably 56 mass% or less.

In the thermoplastic polyester resin composition of the present invention, it is preferable to further blend (G) a metal corrosion-resistant agent. The (G) metal corrosion-resistant agent in the present invention is a compound having a structure represented by Formula (6) below. By having such a structure, the metal corrosion resistance can be further enhanced, and the amount of gas generated from the thermoplastic polyester resin composition at the time of retention can be further reduced.

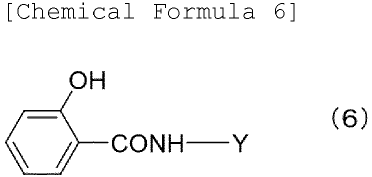

(Y represents a heterocyclic group having a nitrogen atom.)

Y may be any heterocyclic group as long as it is a heterocyclic group having a nitrogen atom, and has one or two or more atoms selected from a carbon atom, an oxygen atom, and a sulfur atom, in addition to a nitrogen atom, as an atom constituting the ring. From the viewpoint of excellent mechanical properties, corrosiveness to metals, melt retention stability, fluidity, flame retardancy, and the like, the number of atoms constituting the ring is preferably 3 to 14 and more preferably 5 to 7. The ring may be any of a saturated ring, a partially unsaturated ring, and an aromatic ring group, and the ring constituting these may be either a monocyclic ring or a condensed ring. The ring is preferably a monocyclic ring from the viewpoint of excellent mechanical properties, corrosiveness to metals, melt retention stability, fluidity, flame retardancy, and the like, and the ring structure is preferably a 3- to 14-membered ring, more preferably a 4-to 7-membered ring, further preferably a 5- to 6-membered ring, and most preferably a 5-membered ring.

Specific examples of Y include a pyrrolyl group, an imidazolyl group, a benzimidazolyl group, an imidazolidinyl group, a pyrazolyl group, a pyrazolidinyl group, a triazolyl group, a tetrazolyl group, an oxazolyl group, an isoxazolyl group, a furazanyl group, a thiazolyl group, an isothiazolyl group, a pyridyl group, a pyridinyl group, a pyridazinyl group, a pyrimidinyl group, a pyrazinyl group, a pyrrolidinyl group, a piperidinyl group, a piperazinyl group, a morpholinyl group, an indolyl group, an indolinyl group, an isoindolyl group, an isoindolinyl group, an indolyzinyl group, an indazolyl group, a quinolinyl group, an isoquinolinyl group, a quinolizinyl group, a quinoxalinyl group, a cinnolinyl group, a phthalazinyl group, and a carbazolyl group. From the viewpoint of excellent mechanical properties, corrosiveness to metals, melt retention stability, and the like, a pyrrolyl group, an imidazolyl group, a benzimidazolyl group, an imidazolidinyl group, a pyrazolyl group, a pyrazolidinyl group, a triazolyl group, and a tetrazolyl group are preferred, and a triazolyl group is more preferred.

Specific examples of the (G) metal corrosion-resistant agent include a compound represented by Chemical Structural Formula (7) below.

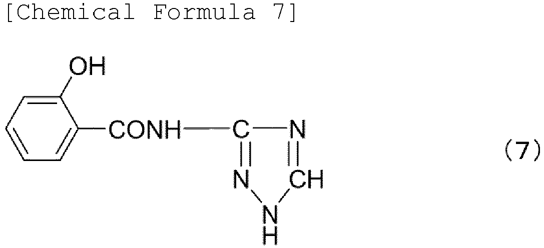

Examples of commercially available products of the compound represented by Chemical Structural Formula (7) include CDA-1 manufactured by ADEKA Corporation. CDA-1M including CDA-1 and an organic compound is also commercially available from ADEKA Corporation, and both of CDA-1 and CDA-1M can be preferably used.

In the present invention, the blending amount of the (G) metal corrosion-resistant agent is preferably 0.001 to 0.5 parts by weight, more preferably 0.01 to 0.3 parts by weight, and further preferably 0.05 to 0.2 parts by weight, with respect to 100 parts by weight of the (A) thermoplastic polyester resin. When the blending amount is 0.001 parts by weight or more, corrosiveness to metals is improved, and when the blending amount is 0.5 parts by weight or less, a mechanical strength is excellent and a high degree of flame retardancy can be maintained.

In the thermoplastic polyester resin composition of the present invention, it is preferable to further blend (H) a retention stability improver. The (H) retention stability improver in the present invention is a compound having a structure represented by Formula (8) below, that is, a structure in which two or more oxygen atoms are bonded to a phosphorus atom having a non-covalent electron pair. By having such a structure, the crosslinking reaction between the (E) polyfunctional epoxy compounds can be suppressed, and the retention stability at a high temperature of 270°C or higher can be further improved. In a general phosphorus compound, the upper limit of the number of oxygen atoms that can be bonded to a phosphorus atom having a non-covalent electron pair is 3 from the valence of the phosphorus atom.

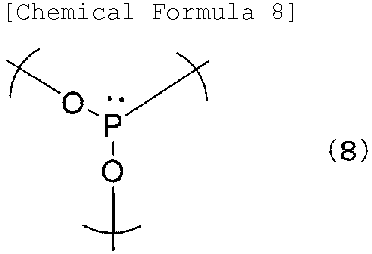

Examples of the (H) retention stability improver used in the present invention include a phosphonite compound as a compound having a structure in which two oxygen atoms are bonded to a phosphorus atom having a non-covalent electron pair, and a phosphite compound as a compound having a structure in which three oxygen atoms are bonded to a phosphorus atom having a non-covalent electron pair.

Examples of the phosphonite compound include condensates of phosphonous acid compounds such as phenylphosphonite and 4,4'-biphenylene diphosphonite with an aliphatic alcohol having 4 to 25 carbon atoms and/or phenol compounds such as 2,6-di-t-butylphenol and 2,4-di-t-butyl-5-methylphenol. Specific examples thereof include bis(2,4-di-t-butyl-5-methylphenyl)-phenyl phosphonite, tetrakis(2,4-di-t-butyl-5-methylphenyl)-4,4'-biphenylene diphosphonite, and tetrakis(2,4-di-t-butylphenyl)-4,4'-biphenylene diphosphonite. Two or more kinds of these may be used.

Examples of the phosphite compound include condensates of phosphorus acid with an aliphatic alcohol having 4 to 25 carbon atoms, polyhydric alcohols such as glycerol and pentaerythritol and/or phenol compounds such as 2,6-di-t-butylphenol and 2,4-di-t-butylphenol. Specific examples thereof include tris(alkylaryl) phosphites (provided that, the alkyl group in this case is a branched alkyl group having 3 to 6 carbon atoms) such as triisodecyl phosphite, trisnonylphenyl phosphite, diphenyl isodecyl phosphite, phenyl diisodecyl phosphite, 2,2-methylenebis(4,6-di-t-butylphenyl)octyl phosphite, 4,4'-butylidenebis(3-methyl-6-t-butylphenyl)ditridecyl phosphite, tris(2,4-di-t-butylphenyl) phosphite, tris(2-t-butyl-4-methylphenyl) phosphite, tris(2,4-di-t-amylphenyl) phosphite, tris(2-t-butylphenyl) phosphite, tris[2-(1,1-dimethylpropyl)-phenyl] phosphite, and tris[2,4-(1,1-dimethylpropyl)-phenyl] phosphite, and bis(alkylaryl)pentaerythritol diphosphites (provided that, the alkyl group in this case is an alkyl group having 3 to 9 carbon atoms) such as bis(2-t-butylphenyl)phenyl phosphite, tris(2-cyclohexylphenyl) phosphite, tris(2-t-butyl-4-phenylphenyl) phosphite, bis(octyl)pentaerythritol diphosphite, bis(octadecyl)pentaerythritol diphosphite, bis(2,4-di-t-butyl-4-methylphenyl)pentaerythritol diphosphite, bis(2,6-di-t-butyl-4-methylphenyl)pentaerythritol diphosphite, and bis(nonylphenyl)pentaerythritol diphosphite. Two or more kinds of these may be used.

From the viewpoint of heat resistance stability, the (H) retention stability improver preferably has a cyclic phosphite structure. The cyclic phosphite is a compound having a constituent unit represented by Formula (9) below, in which a phosphorus atom in the following constituent unit and two or more oxygen atoms bonded thereto are contained in a ring. As a specific example, bis(alkylaryl)pentaerythritol diphosphite is preferred, and examples thereof include bis(2,4-di-t-butyl-4-methylphenyl)pentaerythritol diphosphite and bis(2,6-di-t-butyl-4-methylphenyl)pentaerythritol diphosphite.

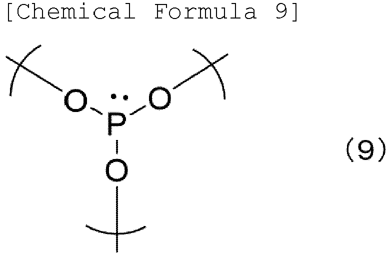

In the present invention, the blending amount of the (H) retention stability improver is preferably 0.001 to 0.5 parts by weight with respect to 100 parts by weight of the (A) thermoplastic polyester resin. By setting the blending amount of the (H) retention stability improver to 0.001 parts by weight or more, retention stability can be improved. The blending amount thereof is more preferably 0.01 parts by weight or more and further preferably 0.05 parts by weight or more. On the other hand, by setting the blending amount of the (H) retention stability improver to 0.5 parts by weight or less, long-term hydrolysis resistance and mechanical properties can be further improved. The blending amount thereof is more preferably 0.4 parts by weight or less and further preferably 0.3 parts by weight or less.

In the thermoplastic polyester resin composition of the present invention, it is preferable to further blend (I) a fibrous reinforcing material. A mechanical strength and heat resistance can be further improved by the (I) fibrous reinforcing material.

Specific examples of the (I) fibrous reinforcing material include glass fibers, aramid fibers, and carbon fibers. As the glass fiber, it is preferable to use glass fibers that are chopped strand type or roving type glass fibers which are treated with a silane coupling agent such as an aminosilane compound and an epoxy silane compound and/or a binding agent containing urethane, a copolymer formed of an acrylic acid such as an acrylic acid/styrene copolymer, a copolymer formed of maleic anhydride such as a methyl acrylate/methyl methacrylate/maleic anhydride copolymer, vinyl acetate, bisphenol A diglycidyl ether, or one or more epoxy compounds such as a novolac epoxy compound. Glass fibers treated with a binding agent containing a copolymer formed of maleic anhydride are further preferred from the viewpoint that hydrolysis resistance can be further improved. The silane coupling agent and/or the binding agent may be mixed in an emulsion liquid and used. The fiber diameter of the glass fiber is usually preferably in a range of 1 to 30 µm. From the viewpoint of the dispersibility of the glass fiber in the resin, the lower limit value thereof is preferably 5 um. From the viewpoint of a mechanical strength, the upper limit value thereof is preferably 15 um. Although the fiber cross section is usually circular, a fibrous reinforcing material having an arbitrary cross section such as an elliptical glass fiber, a flat glass fiber, or an elongate glass fiber having an arbitrary aspect ratio can also be used, and there are characteristics in that fluidity during injection molding is improved and a molded article with less warpage is obtained.

The blending amount of the (I) fibrous reinforcing material is preferably 1 to 100 parts by weight with respect to 100 parts by weight of the (A) thermoplastic polyester resin. By blending 1 part by weight or more of the (I) fibrous reinforcing material, a mechanical strength and heat resistance can be further improved. The blending amount thereof is more preferably 2 parts by weight or more and further preferably 3 parts by weight or more. On the other hand, by blending 100 parts by weight or less of the (I) fibrous reinforcing material, a mechanical strength and fluidity can be further improved. The blending amount thereof is more preferably 95 parts by weight or less and further preferably 90 parts by weight or less.

The preferable range of the blending amount of the (I) fibrous reinforcing material can also be set as the content in the thermoplastic polyester resin composition. The content of the (I) fibrous reinforcing material in the thermoplastic polyester resin composition is preferably 1 to 70 parts by weight when the amount of the thermoplastic polyester resin composition is regarded as 100 parts by weight. By blending 1 part by weight or more of the (I) fibrous reinforcing material when the amount of the thermoplastic polyester resin composition is regarded as 100 parts by weight, a mechanical strength and heat resistance can be further improved. The blending amount thereof is more preferably 3 parts by weight or more and further preferably 5 parts by weight or more. On the other hand, by blending 70 parts by weight or less of the (I) fibrous reinforcing material when the amount of the thermoplastic polyester resin composition is regarded as 100 parts by weight, a mechanical strength and fluidity can be further improved. The blending amount thereof is more preferably 60 parts by weight or less and further preferably 55 parts by weight or less.

In the thermoplastic polyester resin composition of the present invention, it is preferable to further blend (J) a dripping inhibitor. In the present invention, the dripping inhibitor is a compound capable of suppressing melt dripping of a resin composition during burning and further improving flame retardancy, and examples thereof include a fluororesin.

The fluororesin is a resin containing fluorine in its molecule, and specific examples include polytetrafluoroethylene, polyhexafluoropropylene, (tetrafluoroethylene/hexafluoropropylene) copolymers, (tetrafluoroethylene/perfluoroalkyl vinyl ether) copolymers, (tetrafluoroethylene/ethylene) copolymers, (hexafluoropropylene/propylene) copolymers, polyvinylidene fluoride, and (vinylidene fluoride/ethylene) copolymers. Among these, polytetrafluoroethylene, (tetrafluoroethylene/perfluoroalkyl vinyl ether) copolymers, (tetrafluoroethylene/hexafluoropropylene) copolymers, (tetrafluoroethylene/ethylene) copolymers, and polyvinylidene fluoride are preferred, and polytetrafluoroethylene and (tetrafluoroethylene/ethylene) copolymers are particularly preferred.

The blending amount of the dripping inhibitor is preferably 0.01 to 1 part by weight with respect to 100 parts by weight of the (A) thermoplastic polyester resin, from the viewpoint of a balance between flame retardancy and a mechanical strength. By setting the blending amount of the dripping inhibitor to 0.01 parts by weight or more, flame retardancy can be secured. The blending amount thereof is more preferably 0.03 parts by weight or more and further preferably 0.05 parts by weight or more. On the other hand, by setting the blending amount of the dripping inhibitor to 1 part by weight or less, fluidity of the thermoplastic resin composition can also be maintained. The blending amount thereof is more preferably 0.8 parts by weight or less and further preferably 0.6 parts by weight or less.

In the resin composition of the present invention, one or more optional additives such as an ultraviolet absorber, a photostabilizer, a plasticizer, a release agent, an antistatic agent, carbon black, titanium oxide, and pigments and dyes of various colors may be blended, to the extent that the object of the present invention is not impaired.

In the resin composition of the present invention, a thermoplastic resin other than the component (A) and the component (F) may be blended to extent that the object of the present invention is not impaired, and moldability, dimensional accuracy, molding shrinkage, toughness and the like can be improved. Examples of the thermoplastic resin other than the component (A) include a polyamide resin, a polyacetal resin, a polyurethane resin, an aromatic or aliphatic polyketone resin, a polyphenylene sulfide resin, a polyether ether ketone resin, a polyimide resin, a thermoplastic starch resin, a polyurethane resin, an aromatic polycarbonate resin, a polyarylate resin, a polysulfone resin, a polyether sulfone resin, a polyphenylene ether resin, poly-4-methylpentene-1, a polyether imide resin, a cellulose acetate resin, and a polyvinyl alcohol resin.

In the resin composition of the present invention, a polyhydric alcohol compound having three or four functional groups and containing one or more alkylene oxide units (hereinafter, referred to as "polyhydric alcohol compound" in some cases) can be blended. The polyhydric alcohol compound may be a low-molecular-weight compound or a polymer. Examples of the functional group include a hydroxyl group, an aldehyde group, a carboxylic acid group, a sulfo group, an amino group, an isocyanate group, a carbodiimide group, an oxazoline group, an oxazine group, an ester group, an amide group, a silanol group, and a silyl ether group. Among these, it is preferable to have three or four functional groups, which are the same as or different from each other, in particular, it is further preferable to have three or four functional groups, which are the same as each other, from the viewpoint of further improving fluidity, and it is particularly preferable to use a compound containing a propylene oxide unit as an alkylene oxide unit.

As an index of hydrolysis resistance of a molded article formed of the thermoplastic polyester resin composition, ratios of tensile strengths after exposure of an ASTM No. 1 dumbbell-shaped (thickness: 1/8 inches) test piece for tensile property evaluation obtained by molding the thermoplastic polyester resin composition of the present invention according to ASTM D638 (2005) for 50 hours and 100 hours in an atmosphere of a relative humidity of 100% and a temperature of 121°C to a tensile strength before exposure, that is, a numerical value of Tensile strength retention rate: (Tensile strength after exposure/Tensile strength before exposure) × 100 (%) is focused. The molded article in an embodiment of the present invention preferably has tensile strength retention rates of 60% or more and 40% or more after exposure for 50 hours and after exposure for 100 hours in an atmosphere of a relative humidity of 100% and a temperature of 121°C, respectively, in order to suppress a decrease in molecular weight due to hydrolysis of the thermoplastic polyester resin. The fact that the tensile strength retention rates after exposure for 50 hours and after exposure for 100 hours in the conditions are less than 60% and less than 40%, respectively, means that the carboxy terminal group is increased by hydrolysis of the polyester resin, and a decrease in molecular weight is progressing. As the carboxy terminal group is increased with the hydrolysis of the main chain, a decrease in molecular weight of the polyester resin is further promoted, and mechanical properties deteriorate. The tensile strength retention rate after exposure for 50 hours in an atmosphere of a relative humidity of 100% and a temperature of 121°C is preferably 65% or more and more preferably 70% or more. The tensile strength retention rate after exposure for 100 hours in an atmosphere of a relative humidity of 100% and a temperature of 121°C is preferably 45% or more and more preferably 50% or more. As the values of the tensile strength retention rates after exposure for 50 hours and after exposure for 100 hours in an atmosphere of a relative humidity of 100% and a temperature of 121°C are close to 100%, a decrease in molecular weight due to the progress of hydrolysis of the polyester resin is suppressed, and hydrolysis resistance is high.

The molded article formed of the thermoplastic polyester resin composition of the present invention preferably has a comparative tracking index according to IEC60112 of 400 V or more. IEC60112 described herein is a safety standard of tracking resistance revised by the International Electrotechnical Commission (commonly known as IEC) in 2003, and the comparative tracking index can be measured using a 0.1% ammonium chloride aqueous solution as an electrolyte solution accordance to a method for measuring a comparative tracking index of IEC60112:2003. This standard is a safety standard for tracking breakdown in which an electric field and contaminants (electrolytes) such as dust and dirt are generated on a resin surface to partially discharge the resin, decomposition and carbonization of the resin proceed by heat generated at that time, and finally dielectric breakdown of the surface and ignition due to local overheating are caused, and a resin material used in the vicinity of the electric field such as mechanical machine parts, electrical and electronic components, or automotive parts is required to have a high degree of tracking resistance. The comparative tracking index is more preferably 500 V or more, further preferably 550 V or more, and most preferably 600 V or more.

The thermoplastic polyester resin composition of the present invention can be obtained, for example, by melt-kneading the components (A) to (F), and as necessary, other components.

Examples of the melt-kneading method include a method in which the component (A), the component (B), the component (C), the component (D), the component (E), the component (F), and as necessary, the component (G), the component (H), and various additives are preliminarily mixed and supplied to an extruder or the like for sufficient melt-kneading, and a method in which predetermined amount of each component is supplied to an extruder or the like using a fixed amount feeder such as a weight feeder for sufficient melt-kneading.

Examples of the preliminary mixing include a dry blending method and a mixing method using mechanical mixing devices such as a tumble mixer, a ribbon mixer, and a Henschel mixer. The (I) fibrous reinforcing material and an inorganic filler other than the fibrous reinforcing material may be added through a side feeder installed between the feeding portion and the vent portion of a multi-screw extruder such as a twin-screw extruder. In the case of a liquid additive, a method of adding a liquid additive by installing a liquid feeding nozzle between the feeding portion and the vent portion of a multi-screw extruder such as a twin-screw extruder and using a plunger pump, a method of supplying a liquid additive using a metering pump from the feeding portion or the like.

The thermoplastic polyester resin composition of the present invention is preferably formed into pellets and then subjected to molding processing. Examples of the pelletizing method include a method of extruding the thermoplastic polyester resin composition in the form of strands using a single-screw extruder, a twin-screw extruder, a triple-screw extruder, a conical extruder, a kneader-type mixer, or the like equipped with "uni-melt" or "dulmage" type screw, and then cutting the resulting strands using a strand cutter.

By melt-molding the thermoplastic polyester resin composition of the present invention, a molded article in the form of a film, fiber, and other various types of shapes can be obtained. Examples of the melt-molding method include injection molding, extrusion molding, and blow molding, and injection molding is particularly preferably used.

In addition to a regular injection molding method, other types of injection molding methods are also known such as gas assisted molding, two-color molding, sandwich molding, in-mold molding, insert molding, and injection press molding, and any of the molding methods can also be applied.

With features of excellent flame retardancy, tracking resistance, and long-term hydrolysis resistance, the molded article of the present invention can be used as a molded article for mechanical machine parts, electric components, electronic components, and automotive parts. The molded article of the present invention is excellent in flame retardancy, tracking resistance, and long-term hydrolysis resistance, and thus is particularly useful for electric and electronic components for automobiles.

Specific examples of the mechanical machine parts, electric components, electronic components, and automotive parts include breakers, electromagnetic switches, focus cases, flyback transformers, molded articles for fusers of copying machines and printers, general household electrical appliances, housings of OA equipment and the like, parts of variable capacitor cases, various types of terminal boards, transformers, printed wiring boards, housings, terminal blocks, coil bobbins, connectors, relays, disk drive chassis, transformers, switch parts, wall outlet parts, motor components, sockets, plugs, capacitors, various types of casings, resistors, electric and electronic components into which metal terminals and conducting wires are incorporated, computer-related components, audio components such as acoustic components, parts of lighting equipment, telegraphic communication equipment-related components, telephone equipment-related components, components of air conditioners, components of consumer electronics such as VTR and TV, copying machine parts, facsimile machine parts, components of optical devices, components of automotive ignition devices, connectors for automobiles, and various types of automotive electrical components.

### EXAMPLES

Next, the effects of the thermoplastic polyester resin composition of the present invention will be specifically described by means of Examples. Raw materials used in each of Examples and Comparative Examples are described below. "%" and "part(s)" described herein all represent wt% and part(s) by weight, and "/" in the following resin names means copolymerization.

### (A) Thermoplastic Polyester Resin

<A-1> Polybutylene terephthalate resin: a polybutylene terephthalate resin having a carboxyl group amount of 30 eq/t manufactured by Toray Industries, Inc. was used.

<A-2> Polyethylene terephthalate resin: a polyethylene terephthalate resin having a carboxyl group amount of 40 eq/t manufactured by Toray Industries, Inc. was used.

### (B) Phosphinate

<B-1> Aluminum diethylphosphinate: "Exolit" (registered trademark) OP-1240 manufactured by Clariant Japan K.K. was used.

### (C) Phosphazene Compound

<C-1> Phosphonitrile acid phenyl ester: "Rabitle" (registered trademark) FP-110 manufactured by FUSHIMI Pharmaceutical Co., Ltd., was used.

### (C') Flame Retardant Not Corresponding to (C)

<C'-1> Zinc ethylenediamine phosphate: "Fire Cut" (registered trademark) "ZPO-3" manufactured by SUZUHIRO CHEMICAL CO., LTD. was used.

### (D) Nitrogen-Based Flame Retardant

<D-1> Melamine cyanurate, MC-4000 (average particle diameter: 10 um, white powder) manufactured by Nissan Chemical Corporation was used.

### (E) Polyfunctional Epoxy Compound

<E-1> Dicyclopentadiene type novolac epoxy: "EPICLON" HP-7200H manufactured by DIC Corporation was used (epoxy equivalent: 275 g/eq).

<E-2> Bisphenol A type epoxy: "jER" (registered trademark) 1004K manufactured by Mitsubishi Chemical Corporation was used (epoxy equivalent: 926 g/eq).

### (F) Olefin Resin

<F-1> Acid-modified olefin resin: an ethylene/butene-1/maleic anhydride copolymer, "TAFMER" (registered trademark) MH-5020 manufactured by Mitsui Chemicals, Inc. was used.

<F-2> Olefin resin: an ethylene-butene-1 copolymer, "TAFMER" (registered trademark) A4085S manufactured by Mitsui Chemicals, Inc. was used.

### (G) Metal Corrosion-Resistant Agent

<G-1> Compound represented by Formula (6) above: CDA-1M manufactured by ADEKA Corporation was used.

### (H) Retention Stability Improver

<H-1> Bis(2,6-di-t-butyl-4-methylphenyl)pentaerythritol diphosphite: "ADK STAB" (registered trademark) PEP36 manufactured by ADEKA Corporation was used.

### (I) Fibrous Reinforcing Material

<I-1> Glass fiber treated with a binding agent containing an epoxy compound: a glass fiber ECS03T-187 manufactured by Nippon Electric Glass Co., Ltd., having a cross-sectional diameter of 13 um and a fiber length of 3 mm, was used.

### (J) Dripping Inhibitor

<J-1> A fluororesin, polytetrafluoroethylene, "Teflon" (registered trademark) 6-J manufactured by Du Pont-Mitsui Fluorochemicals Co., Ltd. was used.

### [Method for Measuring Respective Properties]

Properties in Examples and Comparative Examples were evaluated by measurement methods described below.

### (1) Mechanical Properties (Tensile Strength and Tensile Elongation)

An ASTM No. 1 dumbbell-shaped (thickness: 1/8 inches) test piece for tensile property evaluation molded according to ASTM D638 (2005) and a mold notched Izod test piece were obtained using an NEX1000 injection molding machine manufactured by NISSEI PLASTIC INDUSTRIAL CO., LTD. under the molding cycle conditions of 10 seconds of an injection time and a pressure holding time in total and 10 seconds of a cooling time, under the temperature conditions of a molding temperature of 260°C and a mold temperature of 80°C in the case of using a polybutylene terephthalate resin as the component (A) and under the temperature conditions of a molding temperature of 280°C and a mold temperature of 80°C in the case of using a polyethylene terephthalate resin as the component (A). The maximum tensile strength point (tensile strength) and the maximum tensile elongation point (tensile elongation) were measured using the obtained test piece for tensile property evaluation according to ASTM D638 (2005). For each of the tensile strength and tensile elongation, the average value of the measured values of the three test pieces was taken as the corresponding value. A material with a large value of the tensile strength was determined to be excellent in a mechanical strength, and a material with a large value of the tensile elongation was determined to be excellent in toughness.

### (2) Flame Retardancy (Burning Rank)

A burning test piece having a size of 125 mm × 13 mm × thickness 1.6 mm was obtained using an NEX1000 injection molding machine manufactured by NISSEI PLASTIC INDUSTRIAL CO., LTD. under the same injection molding conditions as in the mechanical properties of the above section (1). The flame retardancy was evaluated using the obtained test piece according to the evaluation criteria for the UL94 vertical burning test. For the flame retardancy, the test pieces were rated in the order of V-0 > V-1 > V-2. A test piece with poor flame retardancy that did not meet the V-2 criteria and fall under any of the above flame retardancy ranks was rated as substandard.

### (3) Tracking Resistance (Comparative Tracking Index)

Injection molding was performed using an NEX1000 injection molding machine manufactured by NISSEI PLASTIC INDUSTRIAL CO., LTD. under the same injection molding conditions as in the above section (1) to obtain a square plate having a size of 80 mm × 80 mm × thickness 3 mm. The obtained square plate was used, and the comparative tracking index was measured using a 0.1% ammonium chloride aqueous solution as an electrolyte solution accordance to a method for measuring a comparative tracking index of IEC60112:2003.

### (4) Hydrolysis Resistance (Tensile Strength Retention Rate)

An ASTM No. 1 dumbbell-shaped (thickness: 1/8 inches) test piece for tensile property evaluation molded according to ASTM D638 (2005) was obtained using an NEX1000 injection molding machine manufactured by NISSEI PLASTIC INDUSTRIAL CO., LTD. under the same injection molding conditions as in the above section (1). The obtained ASTM No. 1 dumbbell was placed in a highly accelerated stress test chamber EHS-411 manufactured by ESPEC CORP., set at a temperature of 121°C and a humidity of 100% RH, and subjected to a heat-moisture treatment for 50 hours and 100 hours. For the heat-moisture treated molded article, the maximum tensile strength point was measured under the same conditions as in the tensile test of the above section (1), and the average value of the measured values of the three test pieces was determined. The tensile strength retention rate was determined by the following formula from the maximum tensile strength point after the heat-moisture treatment and the maximum tensile strength point without the heat-moisture treatment. Tensile strength retention rate (%) = (Maximum tensile strength point after heat-moisture treatment ÷ Maximum tensile strength point before heat-moisture treatment) × 100

A material having a tensile strength retention rate after a heat-moisture treatment time of 50 hours of less than 60% and a tensile strength retention rate after a heat-moisture treatment time of 100 hours of less than 40% was determined to be poor in hydrolysis resistance, and a material having a larger numerical value of the tensile strength retention was determined to be excellent in hydrolysis resistance.

### (5) Bleeding out

An ASTM No. 1 dumbbell-shaped test piece for bleeding out evaluation having a test piece thickness of 1/8 inches (above 3.2 mm) was obtained using an NEX1000 injection molding machine manufactured by NISSEI PLASTIC INDUSTRIAL CO., LTD. under the same injection molding conditions as in the above section (1). The obtained ASTM No. 1 dumbbell was placed in a highly accelerated stress test chamber EHS-411 manufactured by ESPEC CORP., set at a temperature of 121°C and a humidity of 100% RH, and subjected to a heat-moisture treatment for 96 hours (for four days). The appearance of the heat-moisture treated molded article was visually observed, and the bleeding out was determined according to the following criteria.
A: No liquid or white powdery bleeding out is observed in the molded article.
B: Liquid or white powdery bleeding out is observed in a part or all of the molded article.

### (6) Corrosion Test of Metal by Heat Treatment at Heat Treatment Temperature of 270°C for Heat Treatment Time of 3 Hours (Metal Corrosion Test)

In a 60 mmϕ glass petri dish with a glass lid, about 10 g of thermoplastic polyester resin composition pellets were put, followed by covering the pellets with a 25 mmϕ watch glass, putting a 10 mm × 20 mm, 1 mm-thick copper plate on the watch glass, and closing the petri dish with the glass lid to obtain a sample. The sample was placed in a gear oven GPHH-200 manufactured by Tabai Espec Corporation, at a controlled temperature of 270°C for 3 hours, the sample was cooled down to room temperature, and the corrosion state of the copper plate in the sample was visually observed. As a determination method, a corroded copper plate became aeruginous as it suffers verdigris, that is, rust forming on copper, and therefore, a case where a copper plate was observed to become aeruginous was determined that corrosion occurred.

### (7) Retention Stability (Rate of Change in Melt Viscosity Index)

The melt viscosity index (melt flow index) of the thermoplastic polyester resin composition was measured using C501DOS manufactured by Toyo Seiki Co., Ltd. under the conditions of a temperature of 270°C and a load of 5000 g according to ASTM D1238 (1999). After the thermoplastic polyester resin composition was further retained in a cylinder for 30 minutes, the melt viscosity index was measured under the same conditions, and the difference (rate (%) of change) between the melt viscosity indices before and after retention with respect to the melt viscosity index before retention was determined. The rate (%) of change calculated here was an absolute value and was calculated as a positive value. A case where the rate of change in melt viscosity index exceeded 50% was determined to be poor in retention stability, and it was determined that the smaller the difference, the better the retention stability.

### (8) Gas Amount

In an aluminum cup, 10 g of the resin composition was weighed, placed in a hot air oven at 270°C at atmospheric pressure using a hot air oven PHH202 manufactured by ESPEC CORP., and subjected to a heat treatment for 3 hours, and then the weight of the resin composition was determined. The ratio (gas amount (%)) of the difference between resin composition weights before and after the heat treatment with respect to the resin composition weight before the heat treatment was determined. A case where the gas amount exceeded 3% was determined that the amount of generated gas was large, and the moldability was poor. It was determined that the smaller the gas amount, the better the moldability.

### [Examples 1 to 25] and [Comparative Examples 1 to 16]

A co-rotating twin-screw extruder equipped with a vent (TEX-30α manufactured by The Japan Steel Works, Ltd.) with a screw diameter of 30 mm and a L/D of 35 was used, and the (A) thermoplastic polyester resin, the (B) phosphinate, the (C) phosphazene compound, the (D) nitrogen-based flame retardant, the (E) polyfunctional epoxy compound, and the (F) olefin resin, and as necessary, the (G) metal corrosion-resistant agent, the (H) retention stability improver, and other materials were mixed at compositions shown in Tables 1 to 5, and the resulting mixture was added from the feeding portion of the twin-screw extruder. The (I) fibrous reinforcing material was added through a side feeder installed between the feeding portion and the vent portion. Melt mixing was performed under the extrusion conditions of screw rotation of 200 rpm and a kneading temperature of 250°C in the case of using a polybutylene terephthalate resin as the component (A) or a kneading temperature of 270°C in the case of using a polyethylene terephthalate resin as the component (A), the resulting resin composition was extruded in the form of strands and passed through a cooling bath, and the resulting strands were then cut into pellets using a strand cutter.

The obtained pellets were dried in a hot air dryer at a temperature of 110°C for 6 hours, and then evaluated by the above-described method, and the results thereof are shown in Tables 1 to 5.

The ratio the parts by weight of the (B) phosphinate and the parts by weight of the (C) phosphazene compound (the parts by weight of the component (B) with respect to 100 parts by weight of the component (A)/the parts by weight of the component (C) with respect to 100 parts by weight of the component (A)) was described as "Requirement (i): (B) / (C)

The content rate (mass%) of the (C) phosphazene compound in 100 mass% of the thermoplastic polyester resin composition was described as "Content rate of (C) phosphazene compound".

When the total amount of the (B) phosphinate, the (C) phosphazene compound, and the (D) nitrogen-based flame retardant is regarded as 100 mass%, the content rates (mass%) of the component (B), the component (C), and the component (D) were described as "Content rate of (B) in (B), (C), and (D)", "Content rate of (C) in (B), (C), and (D)", and "Content rate of (D) in (B), (C), and (D)", respectively.

The content rate (mass%) of the (I) fibrous reinforcing material in 100 mass% of the thermoplastic polyester resin composition was described as "Content rate of (I) fibrous reinforcing material".

**[Table 1]**

| | Symbol | Unit | Example | | | | | | |
|---|---|---|---|---|---|---|---|---|---|
| | | | 1 | 2 | 3 | 4 | 5 | 6 | 7 |
| (A) Thermoplastic polyester resin | A-1 | Parts by weight | 100 | 100 | | 100 | 100 | 100 | 100 |
| | A-2 | Parts by weight | | | 100 | | | | |
| (B) Phosphinate | B-1 | Parts by weight | 20 | 20 | 20 | 25 | 23 | 16 | 20 |
| (C) Phosphazene compound | C-1 | Parts by weight | 7.5 | 7.5 | 7.5 | 7.5 | 6.5 | 7.5 | 9.5 |
| (D) Nitrogen-based flame retardant | D-1 | Parts by weight | 30 | 30 | 30 | 22 | 30 | 30 | 30 |
| (E) Polyfunctional epoxy compound | E-1 | Parts by weight | 2 | 2 | 2 | 2 | 2 | 2 | 2 |
| (F) Olefin resin | F-1 | Parts by weight | 6.5 | 6.5 | 6.5 | 6.5 | 6.5 | 6.5 | 6.5 |
| (I) Fibrous reinforcing material | I-1 | Parts by weight | | 55 | 55 | 55 | 55 | 55 | 55 |
| Requirement (i): (B)/(C) | | | 2.7 | 2.7 | 2.7 | 3.3 | 3.5 | 2.1 | 2.1 |
| Content rate of (C) phosphazene compound | | Mass% | 4.5 | 3.4 | 3.4 | 3.4 | 2.9 | 3.5 | 4.3 |
| Content rate of (B) in (B), (C), and (D) | | Mass% | 34.8 | 34.8 | 34.8 | 45.9 | 38.7 | 29.9 | 33.6 |
| Content rate of (C) in (B), (C), and (D) | | Mass% | 13.0 | 13.0 | 13.0 | 13.8 | 10.9 | 14.0 | 16.0 |
| Content rate of (D) in (B), (C), and (D) | | Mass% | 52.2 | 52.2 | 52.2 | 40.4 | 50.4 | 56.1 | 50.4 |
| Content rate of (I) fibrous reinforcing material | | Mass% | 0 | 25 | 25 | 25 | 25 | 25 | 25 |
| (1) Mechanical properties (tensile strength) | | MPa | 55 | 115 | 118 | 120 | 122 | 125 | 120 |
| (1) Mechanical properties (tensile elongation) | | % | 5.2 | 2.5 | 2.2 | 3.0 | 2.8 | 3.2 | 2.8 |
| (2) Burning rank | | Determination | V-0 | V-0 | V-0 | V-0 | V-0 | V-1 | V-0 |
| (3) Comparative tracking index | | V | 600 | 600 | 600 | 600 | 600 | 600 | 600 |
| (4) Hydrolysis resistance (tensile strength retention rate) Treatment for 50 hours | | % | 70 | 75 | 65 | 71 | 73 | 78 | 78 |
| (4) Hydrolysis resistance (tensile strength retention rate) Treatment for 100 hours | | % | 53 | 55 | 48 | 51 | 52 | 58 | 57 |
| (5) Bleeding out (A: absent, B: present) | | Visual observation | A | A | A | A | A | A | A |
| (6) Metal corrosion test | | Visual observation | No corrosion | No corrosion | No corrosion | No corrosion | No corrosion | No corrosion | No corrosion |
| (7) Retention stability | | % | 33 | 35 | 45 | 47 | 39 | 30 | 36 |
| (8) Gas amount | | % | 2.0 | 1.8 | 2.0 | 2.1 | 1.9 | 1.0 | 4.5 |

**[Table 2]**

| | Symbol | Unit | Example | | | | | |
|---|---|---|---|---|---|---|---|---|
| | | | 8 | 9 | 10 | 11 | 12 | 13 |
| (A) Thermoplastic polyester resin | A-1 | Parts by weight | 100 | 100 | 100 | 100 | 100 | 100 |
| (B) Phosphinate | B-1 | Parts by weight | 25 | 28 | 22.5 | 26 | 28.5 | 20 |
| (C) Phosphazene compound | C-1 | Parts by weight | 3.2 | 4.5 | 9.0 | 9.5 | 7.5 | 7.5 |
| (D) Nitrogen-based flame retardant | D-1 | Parts by weight | 30 | 22 | 23 | 19 | 18.5 | 30 |
| (E) Polyfunctional epoxy compound | E-1 | Parts by weight | 2 | 2 | 2 | 2 | 2 | |
| | E-2 | Parts by weight | | | | | | 2 |
| (F) Olefin resin | F-1 | Parts by weight | 6.5 | 6.5 | 6.5 | 6.5 | 6.5 | 6.5 |
| (I) Fibrous reinforcing material | I-1 | Parts by weight | 55 | 55 | 55 | 55 | 55 | 55 |
| Requirement (i): (B)/(C) | | | 7.8 | 6.2 | 2.5 | 2.7 | 3.8 | 2.7 |
| Content rate of (C) phosphazene compound | | Mass% | 1.4 | 2.1 | 4.1 | 4.4 | 3.4 | 3.4 |
| Content rate of (B) in (B), (C), and (D) | | Mass% | 43.0 | 51.4 | 41.3 | 47.7 | 52.3 | 34.8 |
| Content rate of (C) in (B), (C), and (D) | | Mass% | 5.5 | 8.3 | 16.5 | 17.4 | 13.8 | 13.0 |
| Content rate of (D) in (B), (C), and (D) | | Mass% | 51.5 | 40.4 | 42.2 | 34.9 | 33.9 | 52.2 |
| Content rate of (I) fibrous reinforcing material | | Mass% | 25 | 25 | 25 | 25 | 25 | 25 |
| (1) Mechanical properties (tensile strength) | | MPa | 115 | 113 | 121 | 123 | 119 | 110 |
| (1) Mechanical properties (tensile elongation) | | % | 2.5 | 2.5 | 3.1 | 3.2 | 2.8 | 2.2 |
| (2) Burning rank | | Determination | V-0 | V-0 | V-0 | V-0 | V-0 | V-0 |
| (3) Comparative tracking index | | V | 600 | 600 | 600 | 600 | 600 | 600 |
| (4) Hydrolysis resistance (tensile strength retention rate) | | % | 65 | 65 | 72 | 70 | 69 | 71 |
| Treatment for 50 hours | | | | | | | | |
| (4) Hydrolysis resistance (tensile strength retention rate) | | % | 45 | 43 | 52 | 49 | 48 | 45 |
| Treatment for 100 hours | | | | | | | | |
| (5) Bleeding out (A: absent, B: present) | Visual observation | A | A | A | A | A | A | |
| (6) Metal corrosion test | Visual observation | No corrosion | No corrosion | No corrosion | No corrosion | No corrosion | No corrosion | |
| (7) Retention stability | % | 52 | 48 | 40 | 45 | 30 | 49 | |
| (8) Gas amount | % | 1.5 | 2.3 | 3.4 | 3.7 | 2.5 | 2.5 | |

**[Table 3]**

| | Symbol | Unit | Example | | | | | | | | | | | |
|---|---|---|---|---|---|---|---|---|---|---|---|---|---|---|
| | | | 14 | 15 | 16 | 17 | 18 | 19 | 20 | 21 | 22 | 23 | 24 | 25 |
| (A) Thermoplastic polyester resin | A-1 | Parts by weight | 100 | 100 | 100 | 100 | 100 | 100 | 100 | 100 | 100 | 100 | 100 | 100 |
| (B) Phosphinate | B-1 | Parts by weight | 20 | 20 | 20 | 20 | 20 | 25 | 25 | 25 | 25 | 23 | 25 | 24 |
| (C) Phosphazene compound | C-1 | Parts by weight | 7.5 | 7.5 | 7.5 | 7.5 | 7.5 | 7.5 | 7.5 | 7.5 | 7.5 | 6.5 | 5.0 | 3.2 |
| (D) Nitrogen-based flame retardant | D-1 | Parts by weight | 30 | 30 | 30 | 30 | 30 | 22 | 22 | 22 | 22 | 30 | 22 | 22 |
| (E) Polyfunctional epoxy compound | E-1 | Parts by weight | 8 | 0.3 | 2 | 2 | 2 | 2 | 2 | 2 | 2 | 2 | 2 | 2 |
| (F) Olefin resin | F-1 | Parts by weight | 6.5 | 6.5 | | 3.0 | 15 | 6.5 | 6.5 | 6.5 | 6.5 | 6.5 | 6.5 | 6.5 |
| | F-2 | Parts by weight | | | 6.5 | | | | | | | | | |
| (G) Metal corrosion-resistant agent | G-1 | Parts by weight | | | | | | 0.1 | | | 0.1 | 0.1 | 0.1 | 0.1 |
| (H) Retention stability improver | H-1 | Parts by weight | | | | | | | 0.2 | | 0.2 | 0.2 | 0.2 | 0.2 |
| (I) Fibrous reinforcing material | I-1 | Parts by weight | 58 | 55 | 55 | 55 | 58 | 55 | 55 | 55 | 55 | 55 | 55 | 53 |
| (J) Dripping inhibitor | J-1 | Parts by weight | | | | | | | | 0.4 | 0.4 | 0.4 | 0.4 | 0.4 |
| Requirement (i): (B)/(C) | | | 2.7 | 2.7 | 2.7 | 2.7 | 2.7 | 3.3 | 3.3 | 3.3 | 3.3 | 3.5 | 5.0 | 7.5 |
| Content rate of (C) phosphazene compound | | Mass% | 3.3 | 3.4 | 3.4 | 3.4 | 3.2 | 3.4 | 3.4 | 3.4 | 3.4 | 2.9 | 2.3 | 1.5 |
| Content rate of (B) in (B), (C), and (D) | | Mass% | 34.8 | 34.8 | 34.8 | 34.8 | 34.8 | 45.9 | 45.9 | 45.9 | 45.9 | 38.7 | 48.1 | 48.8 |
| Content rate of (C) in (B), (C), and (D) | Mass% | 13.0 | 13.0 | 13.0 | 13.0 | 13.0 | 13.8 | 13.8 | 13.8 | 13.8 | 10.9 | 9.6 | 6.5 | |
| Content rate of (D) in (B), (C), and (D) | Mass% | 52.2 | 52.2 | 52.2 | 52.2 | 52.2 | 40.4 | 40.4 | 40.4 | 40.4 | 50.4 | 42.3 | 44.7 | |
| Content rate of (I) fibrous reinforcing material | Mass% | 25 | 25 | 25 | 25 | 25 | 25 | 25 | 25 | 25 | 25 | 25 | 25 | |
| (1) Mechanical properties (tensile strength) | MPa | 121 | 110 | 105 | 119 | 100 | 120 | 122 | 122 | 121 | 123 | 119 | 115 | |
| (1) Mechanical properties (tensile elongation) | % | 1.5 | 3.5 | 2.1 | 1.9 | 3.5 | 3.0 | 3.1 | 3.1 | 3.2 | 3.0 | 2.9 | 2.8 | |
| (2) Burning rank | Determination | V-0 | V-0 | V-0 | V-0 | V-1 | V-0 | V-0 | V-0 | V-0 | V-0 | V-0 | V-0 | |
| (3) Comparative tracking index | V | 600 | 600 | 600 | 550 | 600 | 600 | 600 | 600 | 600 | 600 | 600 | 600 | |
| (4) Hydrolysis resistance (tensile strength retention rate) | % | 82 | 61 | 70 | 72 | 77 | 71 | 74 | 71 | 73 | 75 | 70 | 68 | |
| Treatment for 50 hours | | | | | | | | | | | | | | |
| (4) Hydrolysis resistance (tensile strength retention rate) | % | 59 | 41 | 42 | 54 | 59 | 51 | 53 | 51 | 53 | 54 | 49 | 45 | |
| Treatment for 100 hours | | | | | | | | | | | | | | |
| (5) Bleeding out (A: absent, B: present) | Visual observation | A | A | A | A | A | A | A | A | A | A | A | A | |
| (6) Metal corrosion test | Visual observation | No corrosion | No corrosion | No corrosion | No corrosion | No corrosion | No corrosion | No corrosion | No corrosion | No corrosion | No corrosion | No corrosion | No corrosion | |
| (7) Retention stability | % | 100 | 5 | 30 | 30 | 48 | 45 | 30 | 48 | 30 | 28 | 39 | 41 | |
| (8) Gas amount | % | 3.0 | 1 | 1.8 | 1.5 | 2.0 | 1.1 | 1.8 | 2.1 | 0.9 | 0.7 | 0.6 | 0.4 | |

**[Table 4]**

| | Symbol | Unit | Comparative Example | | | | | | | |
|---|---|---|---|---|---|---|---|---|---|---|
| | | | 1 | 2 | 3 | 4 | 5 | 6 | 7 | 8 |
| (A) Thermoplastic polyester resin | A-1 | Parts by weight | 100 | 100 | 100 | 100 | 100 | 100 | 100 | 100 |
| (B) Phosphinate | B-1 | Parts by weight | | | 20 | 20 | 20 | 20 | 26 | 30 |
| (C) Phosphazene compound | C-1 | Parts by weight | | 7.5 | | 7.5 | 7.5 | 7.5 | 13 | 15 |
| (D) Nitrogen-based flame retardant | D-1 | Parts by weight | | 30 | 30 | | 30 | 30 | 10 | 30 |
| (E) Polyfunctional epoxy compound | E-1 | Parts by weight | 1.7 | 2.0 | 2.0 | 2.0 | | 2.0 | 1.7 | 2.0 |
| (F) Olefin resin | F-1 | Parts by weight | | 6.5 | 6.5 | 6.5 | 6.5 | | | 6.5 |
| (I) Fibrous reinforcing material | 1-1 | Parts by weight | 40 | 49 | 52 | 45 | 55 | 54 | 64 | 60 |
| Requirement (i): (B)/(C) | | | - | 0.0 | - | 2.7 | 2.7 | 2.7 | 2.0 | 2.0 |
| Content rate of (C) phosphazene compound | | Mass% | 0.0 | 3.8 | 0.0 | 4.1 | 3.4 | 3.5 | 6.1 | 6.2 |
| Content rate of (B) in (B), (C), and (D) | | Mass% | - | 0.0 | 40.0 | 72.7 | 34.8 | 34.8 | 53.1 | 40.0 |
| Content rate of (C) in (B), (C), and (D) | | Mass% | - | 20.0 | 0.0 | 27.3 | 13.0 | 13.0 | 26.5 | 20.0 |
| Content rate of (D) in (B), (C), and (D) | | Mass% | - | 80.0 | 60.0 | 0.0 | 52.2 | 52.2 | 20.4 | 40.0 |
| Content rate of (I) fibrous reinforcing material | | Mass% | 28 | 25 | 25 | 25 | 25 | 25 | 30 | 25 |
| (1) Mechanical properties (tensile strength) | | MPa | 150 | 125 | 100 | 120 | 100 | 112 | 109 | 90 |
| (1) Mechanical properties (tensile elongation) | | % | 3.8 | 3.5 | 1.5 | 3.0 | 2.5 | 1.2 | 1.7 | 2.5 |
| (2) Burning rank | | Determination | Substanda rd | Substanda rd | V-2 | Substanda rd | V-0 | V-0 | V-0 | V-0 |
| (3) Comparative tracking index | | V | 400 | 600 | 450 | 375 | 600 | 425 | 500 | 600 |
| (4) Hydrolysis resistance (tensile strength retention rate) Treatment for 50 hours | % | 99 | 79 | 59 | 73 | 55 | 69 | 60 | 69 | |
| (4) Hydrolysis resistance (tensile strength retention rate) Treatment for 100 hours | % | 89 | 61 | 37 | 52 | 29 | 49 | 38 | 46 | |
| (5) Bleeding out (A: absent, B: present) | Visual observation | A | A | A | A | A | A | A | B | |
| (6) Metal corrosion test | Visual observation | No corrosion | No corrosion | Corrosi on | No corrosion | No corrosion | No corrosion | No corrosion | No corrosion | |
| (7) Retention stability | % | 6 | 35 | 30 | 32 | 2 | 30 | 30 | 45 | |
| (8) Gas amount | % | 0.8 | 0.8 | 1.5 | 1.3 | 1.8 | 1.5 | 3.5 | 6 | |

**[Table 5]**

| | Symbol | Unit | Comparative Example | | | | | | | |
|---|---|---|---|---|---|---|---|---|---|---|
| | | | 9 | 10 | 11 | 12 | 13 | 14 | 15 | 16 |
| (A) Thermoplastic polyester resin | A-1 | Parts by weight | 100 | 100 | 100 | 100 | 100 | 100 | 100 | 100 |
| (B) Phosphinate | B-1 | Parts by weight | 18 | 20 | 25 | 20 | 15 | 26 | 24 | 35.8 |
| (C) Phosphazene compound | C-1 | Parts by weight | 10 | 2.2 | 2.0 | | 0.6 | 13 | 10 | 16.1 |
| (C') Flame retardant not corresponding to (C) | C'-1 | Parts by weight | | | | 10 | | | | |
| (D) Nitrogen-based flame retardant | D-1 | Parts by weight | 30 | 30 | 30 | 10 | | 10 | 6 | 32.3 |
| (E) Polyfunctional epoxy compound | E-1 | Parts by weight | 2 | 2 | 2 | 2 | | | | |
| | E-2 | Parts by weight | | | | | | | | 1.3 |
| (F) Olefin resin | F-1 | Parts by weight | 6.5 | 6.5 | 6.5 | | | | | |
| (G) Metal corrosion-resistant agent | G-1 | Parts by weight | | | | | 0.02 | | | |
| (I) Fibrous reinforcing material | 1-1 | Parts by weight | 55 | 54 | 55 | 61 | | 64 | 60 | 80.6 |
| (J) Dripping inhibitor | J-1 | Parts by weight | | | | 0.3 | | | | 2.7 |
| Requirement (i): (B)/(C) | | | 1.8 | 9.1 | 12.5 | - | 25.0 | 2.0 | 2.4 | 2.2 |
| Content rate of (C) phosphazene compound | | Mass% | 4.5 | 1.0 | 0.9 | 0.0 | 0.5 | 6.1 | 5.0 | 6.1 |
| Content rate of (B) in (B), (C), and (D) | | Mass% | 31.0 | 38.3 | 43.9 | 66.7 | 96.2 | 53.1 | 60.0 | 42.5 |
| Content rate of (C) in (B), (C), and (D) | | Mass% | 17.2 | 4.2 | 3.5 | 0.0 | 3.8 | 26.5 | 25.0 | 19.1 |
| Content rate of (D) in (B), (C), and (D) | | Mass% | 51.7 | 57.5 | 52.6 | 33.3 | 0.0 | 20.4 | 13.0 | 38.4 |
| Content rate of (I) fibrous | | Mass% | 25 | 25 | 25 | 30 | 0 | 30 | 30 | 30 |
| reinforcing material | | | | | | | | | | |
| (1) Mechanical properties (tensile strength) | MPa | 119 | 106 | 100 | 113 | 55 | 102 | 111 | 110 | |
| (1) Mechanical properties (tensile elongation) | % | 2.0 | 1.8 | 1.5 | 2.6 | 4.4 | 2.4 | 2.5 | 1.1 | |
| (2) Burning rank | Determination | V-2 | V-1 | V-0 | V-0 | V-0 | V-0 | V-0 | V-0 | |
| (3) Comparative tracking index | V | 550 | 550 | 500 | 600 | 550 | 500 | 600 | 600 | |
| (4) Hydrolysis resistance (tensile strength retention rate) Treatment for 50 hours | % | 75 | 61 | 58 | 69 | 42 | 38 | 38 | 67 | |
| (4) Hydrolysis resistance (tensile strength retention rate) Treatment for 100 hours | % | 58 | 39 | 30 | 35 | 21 | 22 | 20 | 35 | |
| (5) Bleeding out (A: absent, B: present) | Visual observation | B | A | A | A | A | A | A | A | |
| (6) Metal corrosion test | Visual observation | No corrosion | Corrosion | Corrosion | Corrosion | No corrosion | No corrosion | No corrosion | No corrosion | |
| (7) Retention stability | % | 29 | 29 | 29 | 25 | 2 | 3 | 5 | 45 | |
| (8) Gas amount | % | 5 | 1.7 | 1.5 | 0.5 | 0.6 | 3.5 | 3.1 | 2.0 | |

Based on the comparison between Examples and Comparative Examples, by setting the blending amounts of the component (B), the component (C), the component (D), the component (E), and the component (F) with respect to 100 parts by weight of the (A) thermoplastic polyester resin in specific ranges, a material excellent in balance among mechanical properties, flame retardancy, tracking resistance, hydrolysis resistance, and metal corrosion resistance was obtained.

## Claims

1. A thermoplastic polyester resin composition being obtained by blending, with respect to 100 parts by weight of (A) a thermoplastic polyester resin, 0.1 to 50 parts by weight of (B) at least one phosphinate selected from a phosphinate and a diphosphinate, 0.1 to 10 parts by weight of (C) a phosphazene compound, 0.1 to 50 parts by weight of (D) a nitrogen-based flame retardant, 0.1 to 10 parts by weight of (E) a polyfunctional epoxy compound, and 0.1 to 20 parts by weight of (F) an olefin resin, the thermoplastic polyester resin composition satisfying the following Requirement (i):
(i) a ratio of the parts by weight of the (B) at least one phosphinate selected from a phosphinate and a diphosphinate to the parts by weight of the (C) phosphazene compound (the parts by weight of component (B) with respect to 100 parts by weight of component (A)/the parts by weight of component (C) with respect to 100 parts by weight of the component (A)) is 2.0 to 8.0.

2. The thermoplastic polyester resin composition according to claim 1, wherein a content rate of the (C) phosphazene compound in 100 mass% of the thermoplastic polyester resin composition is 1 mass% or more and less than 5 mass%.

3. The thermoplastic polyester resin composition according to claim 1 or 2, wherein, when a total amount of the (B) at least one phosphinate selected from a phosphinate and a diphosphinate, the (C) phosphazene compound, and the (D) nitrogen-based flame retardant is regarded as 100 mass%, the (B) at least one phosphinate selected from a phosphinate and a diphosphinate is 30 to 65 mass%, the (C) phosphazene compound is 5 to 40 mass%, and the (D) nitrogen-based flame retardant is 30 to 65 mass%.

4. The thermoplastic polyester resin composition according to any one of claims 1 to 3, wherein the (E) polyfunctional epoxy compound includes at least novolac-type epoxy.

5. The thermoplastic polyester resin composition according to any one of claims 1 to 4, wherein the (F) olefin resin includes at least an olefin resin modified with an acid.

6. The thermoplastic polyester resin composition according to any one of claims 1 to 5, wherein 0.001 to 0.5 parts by weight of (G) a metal corrosion-resistant agent is further blended with respect to 100 parts by weight of the (A) thermoplastic polyester resin.

7. The thermoplastic polyester resin composition according to any one of claims 1 to 6, wherein 0.001 to 0.5 parts by weight of (H) a retention stability improver is further blended with respect to 100 parts by weight of the (A) thermoplastic polyester resin.

8. The thermoplastic polyester resin composition according to any one of claims 1 to 7, wherein 1 to 100 parts by weight of (I) a fibrous reinforcing material is further blended with respect to 100 parts by weight of the (A) thermoplastic polyester resin.

9. The thermoplastic polyester resin composition according to any one of claims 1 to 8, wherein 0.01 to 1 part by weight of (J) a dripping inhibitor is further blended with respect to 100 parts by weight of the (A) thermoplastic polyester resin.

10. The thermoplastic polyester resin composition according to any one of claims 1 to 9, wherein the (A) thermoplastic polyester resin is a polybutylene terephthalate resin.

11. The thermoplastic polyester resin composition according to any one of claims 1 to 10, wherein ratios of tensile strengths after exposure of an ASTM No. 1 dumbbell-shaped (thickness: 1/8 inches) test piece for tensile property evaluation molded according to ASTM D638 (2005) for 50 hours and 100 hours in an atmosphere of a relative humidity of 100% and a temperature of 121°C to a tensile strength before exposure (Tensile strength retention rate (%) = ((Tensile strength after exposure/Tensile strength before exposure) × 100)) are 60% or more and 40% or more, respectively.

12. A molded article being obtained by melt molding the thermoplastic polyester resin composition according to any one of claims 1 to 11.

13. The molded article according to claim 12, wherein a comparative tracking index according to IEC60112 is 400 V or more.

## Patentansprüche

1. Thermoplastische Polyesterharz-Zusammensetzung, die durch Vermischen von, bezogen auf 100 Gewichtsteile von (A), einem thermoplastischen Polyesterharz, 0,1 bis 50 Gewichtsteilen von (B), zumindest einem Phosphinat, das aus einem Phosphinat und einem Diphosphinat ausgewählt ist, 0,1 bis 10 Gewichtsteilen von (C), einer Phosphazen-Verbindung, 0,1 bis 50 Gewichtsteilen von (D), einem Flammschutzmittel auf Stickstoffbasis, 0,1 bis 10 Gewichtsteilen von (E), einer polyfunktionellen Epoxid-Verbindung, und 0,1 bis 20 Gewichtsteilen von (F), einem Olefinharz, erhältlich ist, wobei die thermoplastische Polyesterharz-Zusammensetzung die folgende Voraussetzung (i) erfüllt:
(i) das Verhältnis zwischen den Gewichtsteilen des zumindest einen aus einem Phosphinat und einem Disphosphinat ausgewählten Phosphinats (B) und den Gewichsteilen der Phosphazen-Verbindung (C) (Gewichtsteile von Komponente (B), bezogen auf 100 Gewichtsteile von Komponente (A) / Gewichtsteile von Komponente (C), bezogen auf 100 Gewichtsteile von Komponente (A)) 2,0 bis 8,0 beträgt.

2. Thermoplastische Polyesterharz-Zusammensetzung nach Anspruch 1, wobei der Anteil des Gehalts der (C) Phosphazen-Verbindung in 100 Massen-% der thermoplastischen Polyesterharz-Zusammensetzung 1 Massen-% oder mehr und weniger als 5 Massen-% beträgt.

3. Thermoplastische Polyesterharz-Zusammensetzung nach Anspruch 1 oder 2, wobei, wenn die Gesamtmenge des zumindest einen aus einem Phosphinat und einem Disphosphinat ausgewählten Phosphinats (B), der Phosphazen-Verbindung (C) und dem Flammschutzmittel auf Stickstoffbasis (D) als 100 Massen-% angenommen wird, das zumindest eine aus einem Phosphinat und einem Disphosphinat ausgewählte Phosphinat (B) 30 bis 65 Massen-% ausmacht, die Phosphazen-Verbindung (C) 5 bis 40 Massen-% ausmacht und das Flammschutzmittel auf Stickstoffbasis (D) 30 bis 65 Massen-% ausmacht.

4. Thermoplastische Polyesterharz-Zusammensetzung nach einem der Ansprüche 1 bis 3, wobei die polyfunktionelle Epoxid-Verbindung (E) zumindest ein Epoxid vom Novolak-Typ umfasst.

5. Thermoplastische Polyesterharz-Zusammensetzung nach einem der Ansprüche 1 bis 4, wobei das Olefinharz (F) zumindest ein Olefinharz umfasst, das mit einer Säure modifiziert ist.

6. Thermoplastische Polyesterharz-Zusammensetzung nach einem der Ansprüche 1 bis 5, wobei weiters 0,001 bis 0,5 Gewichtsteile eines metallkorrosionsbeständigen Mittels (G), bezogen auf 100 Gewichtsteile des thermoplastischen Polyesterharzes (A) eingemischt sind.

7. Thermoplastische Polyesterharz-Zusammensetzung nach einem der Ansprüche 1 bis 6, wobei weiters 0,001 bis 0,5 Gewichtsteile eines Retentionsstabilitätsverbesserers (H), bezogen auf 100 Gewichtsteile des thermoplastischen Polyesterharzes (A) eingemischt sind.

8. Thermoplastische Polyesterharz-Zusammensetzung nach einem der Ansprüche 1 bis 7, wobei weiters 1 bis 100 Gewichtsteile von einem faserartigen Verstärkungsmaterial (I), bezogen auf 100 Gewichtsteile des thermoplastischen Polyesterharzes (A) eingemischt sind.

9. Thermoplastische Polyesterharz-Zusammensetzung nach einem der Ansprüche 1 bis 8, wobei weiters 0,01 bis 1 Gewichtsteil von einem Tropfhemmer (J), bezogen auf 100 Gewichtsteile des thermoplastischen Polyesterharzes (A) eingemischt sind.

10. Thermoplastische Polyesterharz-Zusammensetzung nach einem der Ansprüche 1 bis 9, wobei das thermoplastische Polyesterharz (A) ein Polybutylenterephthalat-Harz ist.

11. Thermoplastische Polyesterharz-Zusammensetzung nach einem der Ansprüche 1 bis 10, wobei die Verhältnisse zwischen den Zugfestigkeiten nach Exposition eines Prüflings in Form einer Hantel ASTM-Nr. 1 (Dicke 1/8 Zoll) für die Zugfestigkeitseigenschaftsbewertung, der gemäß ASTM D630 (2005) geformt wurde, für 50 h und 100 h in einer Atmosphäre mit einer relativen Feuchte von 100 % und einer Temperatur von 121 °C und der Zugfestigkeit vor der Exposition (Zugfestigkeitsretentionsrate (%) = ((Zugfestigkeit nach der Exposition / Zugfestigkeit vor der Exposition) × 100)) 60 % oder mehr bzw. 40 % oder mehr betragen.

12. Formteil, der durch Schmelzformen einer thermoplastischen Polyesterharz-Zusammensetzung nach einem der Ansprüche 1 bis 11 erhältlich ist.

13. Formteil nach Anspruch 12, bei dem die gemäß IEC60112 bestimmte Kriechstromfestigkeit 400 V oder mehr beträgt.

## Revendications

1. Composition de résine de polyester thermoplastique obtenue par mélange, par rapport à 100 parties en poids de (A) une résine de polyester thermoplastique, de 0,1 à 50 parties en poids de (B) au moins un phosphinate choisi parmi un phosphinate et un diphosphinate, de 0,1 à 10 parties en poids de (C) un composé de phosphazène, de 0,1 à 50 parties en poids de (D) un ignifugeant à base d'azote, de 0,1 à 10 parties en poids de (E) un composé époxy polyfonctionnel et de 0,1 à 20 parties en poids de (F) une résine oléfinique, la composition de résine de polyester thermoplastique satisfaisant à l'exigence (i) suivante :
(i) un rapport des parties en poids du au moins un phosphinate (B) choisi parmi un phosphinate et un diphosphinate aux parties en poids du composé de phosphazène (C) (les parties en poids du composant (B) par rapport à 100 parties en poids du composant (A)/les parties en poids du composant (C) par rapport à 100 parties en poids du composant (A)) est compris entre 2,0 et 8,0.

2. Composition de résine de polyester thermoplastique selon la revendication 1, dans laquelle un taux de teneur du composé de phosphazène (C) dans 100 % en masse de la composition de résine de polyester thermoplastique est de 1 % en masse ou plus et de moins de 5 % en masse.

3. Composition de résine de polyester thermoplastique selon la revendication 1 ou 2, dans laquelle, lorsqu'une quantité totale du au moins un phosphinate (B) choisi parmi un phosphinate et un diphosphinate, du composé de phosphazène (C) et de l'ignifugeant à base d'azote (D) est considérée comme 100 % en masse, le au moins un phosphinate (B) choisi parmi un phosphinate et un diphosphinate est de 30 à 65 % en masse, le composé de phosphazène (C) est de 5 à 40 % en masse, et l'ignifugeant à base d'azote (D) est de 30 à 65 % en masse.

4. Composition de résine de polyester thermoplastique selon l'une quelconque des revendications 1 à 3, dans laquelle le composé époxy polyfonctionnel (E) comprend au moins un époxy de type novolaque.

5. Composition de résine de polyester thermoplastique selon l'une quelconque des revendications 1 à 4, dans laquelle la résine d'oléfine (F) comprend au moins une résine d'oléfine modifiée par un acide.

6. Composition de résine de polyester thermoplastique selon l'une quelconque des revendications 1 à 5, dans laquelle de 0,001 à 0,5 partie en poids de (G) un agent résistant à la corrosion des métaux est en outre mélangée par rapport à 100 parties en poids de la résine de polyester thermoplastique (A).

7. Composition de résine de polyester thermoplastique selon l'une quelconque des revendications 1 à 6, dans laquelle de 0,001 à 0,5 partie en poids de (H) un améliorateur de stabilité de rétention est en outre mélangée par rapport à 100 parties en poids de la résine de polyester thermoplastique (A).

8. Composition de résine de polyester thermoplastique selon l'une quelconque des revendications 1 à 7, dans laquelle de 1 à 100 partie en poids de (I) un matériau de renforcement fibreux sont en outre mélangées par rapport à 100 parties en poids de la résine de polyester thermoplastique (A).

9. Composition de résine de polyester thermoplastique selon l'une quelconque des revendications 1 à 8, dans laquelle de 0,01 à 1 partie en poids de (J) un inhibiteur d'égouttement est en outre mélangée par rapport à 100 parties en poids de la résine de polyester thermoplastique (A).

10. Composition de résine de polyester thermoplastique selon l'une quelconque des revendications 1 à 9, dans laquelle la résine de polyester thermoplastique est une résine de polytéréphtalate de butylène.

11. Composition de résine de polyester thermoplastique selon l'une quelconque des revendications 1 à 10, dans laquelle des taux de résistances à la traction après exposition d'une pièce de test en forme d'haltère (épaisseur : 1/8 pouces) ASTM n°1 pour l'évaluation des propriétés de traction moulée selon la norme ASTM D638 (2005) pendant 50 heures et 100 heures dans une atmosphère d'une humidité relative de 100 % et d'une température de 121°C à une résistance à la traction avant exposition (Taux de rétention de résistance à la traction (%) = ((Résistance à la traction après exposition/Résistance à la traction avant exposition) × 100)) sont respectivement de 60 % ou plus et de 40 % ou plus.

12. Article moulé étant obtenu par un moulage à l'état fondu d'une composition de résine de polyester thermoplastique selon l'une quelconque des revendications 1 à 11.

13. Article moulé selon la revendication 12, dans lequel un indice de suivi comparatif selon IEC60112 est de 400 V ou plus.
